# EUROPEAN PATENT APPLICATION

(11) **EP 3 623 510 A1**
(43) Date of publication of application: **18.03.2020**
(21) Application number: 19195174.8
(22) Date of filing: 03.09.2019
(51) Int. Cl.: D04H 1/587, C08G 63/02, C08L 67/02, D21H 17/53

(54) **SHEET MANUFACTURING BINDING MATERIAL, RECEIVING CONTAINER, SHEET, AND SHEET MANUFACTURING APPARATUS**

(30) Priority: 12.09.2018 JP 2018170784
(71) Applicant: Seiko Epson Corporation, Tokyo 160-8801 (JP)
(72) Inventor: SAGO, Takumi, Suwa-shi, Nagano 392-8502 (JP); UENO, Yoshihiro, Suwa-shi, Nagano 392-8502 (JP); KURATA, Hiroki, Suwa-shi, Nagano 392-8502 (JP); SEKI, Shunichi, Suwa-shi, Nagano 392-8502 (JP); SUDA, Haruna, Suwa-shi, Nagano 392-8502 (JP)
(74) Representative: Miller Sturt Kenyon

(57) **Abstract**

The present disclosure provides a sheet manufacturing binding material which includes a polyester obtained by a reaction between a polyvalent alcohol having a secondary hydroxyl group and a polybasic acid.

## Description

The present application is based on, and claims priority from JP Application Serial Number 2018-170784, filed September 12, 2018, the disclosure of which is hereby incorporated by reference herein in its entirety.

### BACKGROUND

### 1. Technical Field

The present disclosure relates to a sheet manufacturing binding material, a receiving container, a sheet, and a sheet manufacturing apparatus.

### 2. Related Art

A method to obtain a sheet-shaped or a film-shaped molded body by depositing a fibrous material and then applying a binding force between fibers thus deposited has been performed for a long time. As one typical example thereof, manufacturing of paper by paper making using water may be mentioned. An apparatus used for the paper making may require large-scale utilities, such as water, electric power, and drainage facilities, in many cases, and reduction in scale thereof may not be easily performed. In consideration of the points described above, as a sheet manufacturing method instead of the paper making method, a method, a so-called dry method, in which water is not used or hardly used has been anticipated.

JP-A-2015-92032 has disclosed a dry method for forming a sheet and a sheet manufacturing binding material containing a resin which binds fibers to be used for the sheet. In addition, International Publication No. 2017/006533 has disclosed a pulverization index of a resin of a resin powder used for an apparatus manufacturing a sheet by a dry method.

When a sheet containing fibers and a resin is manufactured, although the resin is used after being pulverized into a suitable size so as to be preferably mixed with the fibers, the degree of easiness to pulverize the resin to have a predetermined particle diameter may vary in some cases dependent on the type of resin. In addition, when a sheet containing fibers and a resin is manufactured, the resin used therefor may be softened in some cases, for example, when being heated to a temperature higher than its glass transition temperature. Hence, dependent on the type of resin, the rigidity of the sheet may be decreased in a high-temperature environment in some cases.

### SUMMARY

A sheet manufacturing binding material according to one aspect of the present disclosure comprises: a polyester obtained by a reaction between a polyvalent alcohol having a secondary hydroxyl group and a polybasic acid.

In the sheet manufacturing binding material according to the above aspect, the polyester may have a pulverization index of 0.30 to 0.80.

In the sheet manufacturing binding material according to the above aspect, the polybasic acid may be a polyvalent carboxylic acid having an aromatic structure.

In the sheet manufacturing binding material according to the above aspect, the polybasic acid may be selected from a dicarboxylic acid having an aromatic structure and a tricarboxylic acid having an aromatic structure.

In the sheet manufacturing binding material according to the above aspect, the polyester may have a glass transition temperature of 65.0°C or more.

In the sheet manufacturing binding material according to the above aspect, the polyester may have a softening temperature of 130.0°C or less.

In the sheet manufacturing binding material according to the above aspect, the polyester may form composite particles integrally with an aggregation suppressor.

In the sheet manufacturing binding material according to the above aspect, the polyester and the aggregation suppressor may form composite particles integrally with a coloring material.

**The** sheet manufacturing binding material according to the above aspect may have a volume basis average particle diameter of 20.0 µm or less.

A method for manufacturing a sheet manufacturing binding material according to another aspect of the present disclosure is a method for manufacturing the sheet manufacturing binding material according to the aspect described above.

A receiving container according to another aspect of the present disclosure is a receiving container which receives the sheet manufacturing binding material according to the aspect described above.

A sheet according to another aspect of the present disclosure comprises: fibers; and the sheet manufacturing binding material according to the aspect described above, and the fibers are bound to each other by the sheet manufacturing binding material.

A sheet manufacturing apparatus according to another aspect of the present disclosure, comprises: a mixing portion mixing fibers and the sheet manufacturing binding material according to the aspect described above; a deposition portion depositing a mixture mixed in the mixing portion; and a sheet forming portion forming a sheet by heating a deposit deposited in the deposition portion.

### BRIEF DESCRIPTION OF THE DRAWINGS

FIG. 1A is a schematic cross-sectional view showing one example of a particle which integrally includes a polyester and a coloring material according to an embodiment.
FIG. 1B is a schematic cross-sectional view showing another example of the particle which integrally includes a polyester and a coloring material according to the embodiment.
FIG. 1C is a schematic cross-sectional view showing another example of the particle which integrally includes a polyester and a coloring material according to the embodiment.
FIG. 1D is a schematic cross-sectional view showing another example of the particle which integrally includes a polyester and a coloring material according to the embodiment.
FIG. 2 is a schematic view showing one example of a receiving container according to an embodiment.
FIG. 3A is a schematic view illustrating the rigidity of a sheet at a high temperature.
FIG. 3B is a schematic view illustrating the rigidity of a sheet at a high temperature.
FIG. 3C is a schematic view illustrating the rigidity of a sheet at a high temperature.
FIG. 3D is a schematic view illustrating the rigidity of a sheet at a high temperature.
FIG. 4 is a schematic view showing one example of a sheet manufacturing apparatus according to an embodiment.

### DESCRIPTION OF EXEMPLARY EMBODIMENTS

Hereinafter, several embodiments of the present disclosure will be described. The following embodiments are each described to explain one example of the present disclosure. The present disclosure is not limited to the following embodiments and includes various changed and/or modified embodiments to be performed within the range in which the scope of the present disclosure is not changed. In addition, all the structures which will be described below are not always required to be essential structures of the present disclosure.

### 1. Sheet Manufacturing Binding Material

A sheet manufacturing binding material of this embodiment contains a polyester obtained by a reaction between a polyvalent alcohol having a secondary hydroxyl group and a polybasic acid. The polyester is contained in the form of particles in the sheet manufacturing binding material of this embodiment. That is, the sheet manufacturing binding material of this embodiment has characteristics of a powder containing polyester particles. In this case, the polyester particle may form composite particles together with at least one another substance as described later. Hereinafter, first, chemical characteristics of the polyester will be described; next, physical characteristics or industrial characteristics thereof will be described; and furthermore, for example, the composite particles will be described.

### 1.1. Chemical Structures of Polyester

**The** polyester contained in the sheet manufacturing binding material of this embodiment is obtained by a reaction between a polyvalent alcohol having a secondary hydroxyl group and a polybasic acid.

The polyvalent alcohol having a secondary hydroxyl group is a polyvalent alcohol having a hydroxyl group bonded to a secondary carbon atom, and for example, there may be mentioned a divalent alcohol, such as propylene glycol, 1,2-butanediol, 2,2,4-trimethyl-1,3-pentanediol, 2-methyl-2,4-pentanediol, 1,2,2-trimethyl-1,3-propanediol, 2,2-dimethyl-3-isopropyl-1,3-propanediol, 1,3-butanediol, 1,2-hexanediol, 2-ethyl-1,3-hexanediol, or 2,5-hexanediol; or a trivalent alcohol, such as glycerin or hexanetriol.

As the polyvalent alcohol which forms the polyester contained in the sheet manufacturing binding material of this embodiment, although the polyvalent alcohol having a secondary hydroxyl group is an essential component, another polyvalent alcohol may also be used as an arbitrary component. As the another polyvalent alcohol described above, for example, there may be mentioned an aliphatic polyol, such as ethylene glycol, diethylene glycol, 1,3-propanediol, 1,4-butanediol, 1,5-pentanediol, 3-methyl-1,5-pentanediol, neopentyl glycol, 1,6-hexanediol, 1,4-bis(hydroxymethyl)cyclohexane, trimethylolethane, trimethylolpropane, or pentaerythritol; an ether glycol, such as a polyoxyethylene glycol or a polyoxypropylene glycol; a modified polyether polyol obtained by a ring-opening polymerization between the aliphatic polyol mentioned above and a cyclic ether-bond containing compound, such as ethylene oxide, propylene oxide, tetrahydrofuran, ethyl glycidyl ether, propylene glycidyl ether, butyl glycidyl ether, phenyl glycidyl ether, or allyl glycidyl ether; a lactone-based polyester polyol obtained by a polycondensation reaction between the aliphatic polyol mentioned above and a lactone, such as ε-caprolactone; a bisphenol, such as bisphenol A, bisphenol B, bisphenol F, or bisphenol S; or a bisphenol alkylene oxide adduct obtained by addition of ethylene oxide, propylene oxide, or the like to the bisphenol mentioned above.

As the polyvalent alcohol which forms the polyester contained in the sheet manufacturing binding material of this embodiment, a polyvalent alcohol having a secondary hydroxyl group is preferably used. When another polyvalent alcohol other than the polyvalent alcohol having a secondary hydroxyl group is also used together therewith as an arbitrary component, although the rate thereof is not particularly limited, with respect to 100 moles of the total of the polyvalent alcohols, the amount of the polyvalent alcohol having a secondary hydroxyl group is preferably 50 to 100 moles and more preferably 70 to 100 moles.

As the polybasic acid which forms the polyester contained in the sheet manufacturing binding material of this embodiment, for example, there may be mentioned a dibasic acid, that is, a dicarboxylic acid, such as adipic acid, succinic acid, malonic acid, glutaric acid, azelaic acid, sebacic acid, or cyclohexane carboxylic acid, having an aliphatic structure, or a derivative or an ester compound thereof; or a dibasic acid, that is, a dicarboxylic acid, such as maleic acid, maleic anhydride, fumaric acid, itaconic acid, citraconic acid, or tetrahydrophthalic anhydride, having an ethylenic unsaturated bond, or a derivative or an ester compound thereof, and furthermore, for example, there may also be mentioned a polybasic acid having an aromatic structure, that is, a dicarboxylic acid, such as phthalic anhydride, terephthalic acid, isophthalic acid, or orthophthalic acid, having an aromatic compound, or a derivative or an ester compound thereof (hereinafter, referred to as dicarboxylic acid having an aromatic structure); a trivalent or a more-valent carboxylic acid, such as trimellitic acid, trimellitic anhydride, pyromellitic acid, or pyromellitic anhydride, having an aromatic structure, or a derivative or an ester compound thereof (hereinafter, referred to as trivalent or more-valent carboxylic acid having an aromatic structure). In addition, the polybasic acid is a polyvalent acid compound having a plurality of acid groups and is able to form an ester bond by a reaction with the polyvalent alcohol mentioned above. The polybasic acid is preferably a polyvalent organic acid and more preferably a polyvalent carboxylic acid.

In order to increase the glass transition temperature of the polyester, a polybasic acid having an aromatic structure is preferably used as the polybasic acid, and a dicarboxylic acid having an aromatic structure or a trivalent or a more-valent carboxylic acid having an aromatic structure is more preferably used. The rate of the polybasic acid having an aromatic structure in polybasic acid components with respect to 100 moles of the total of the polybasic acid components is preferably 60 to 100 moles, more preferably 80 to 100 moles, and particularly preferably 100 moles, that is, all the polybasic acids are each particularly preferably the polybasic acid having an aromatic structure. Accordingly, the glass transition temperature of the polyester can be increased. Furthermore, as the polybasic acid having an aromatic structure in the polybasic acid components, when a dicarboxylic acid having an aromatic structure and a trivalent or a more-valent carboxylic acid having an aromatic structure are used, the lower limit of the rate of the trivalent or the more-valent carboxylic acid having an aromatic structure with respect to 100 moles of the total of the dicarboxylic acid having an aromatic structure and the trivalent or the more-valent carboxylic acid having an aromatic structure is preferably 0.1 moles or more and more preferably 1 mole or more, and the upper limit thereof is preferably 10 moles or less and more preferably 5 moles or less.

By the use of the polybasic acid having an aromatic structure, a high glass transition temperature can be obtained. In addition, when the dicarboxylic acid and the tricarboxylic acid are used, the polyester can be formed to have a branched structure, and hence, a strength of the sheet manufacturing binding material against an exterior mechanical force can be increased. Accordingly, a sheet rigidity at a high temperature of the sheet thus manufactured can be in creased.

The polyester contained in the sheet manufacturing binding material of this embodiment can be manufactured by a known polycondensation reaction method. For example, under the presence of an esterification catalyst (such as a tin compound, a titanium compound, or a zirconium compound) or a transesterification catalyst (such as a lead compound, a tin compound, a zinc compound, or a titanium compound), the polyester can be manufactured from the polyvalent alcohol and the polybasic acid described above by a manufacturing method, such as a transesterification reaction, a normal pressure dehydration reaction, a reduced-pressure or a vacuum dehydration reaction, a solution polycondensation reaction, or a solid-phase polycondensation reaction. In addition, when the polyesterification reaction is required to be traced, by measurement of one selected from the acid value, the hydroxyl value, the viscosity, the softening temperature, and the like, the polyesterification reaction can be traced.

As an apparatus used for manufacturing of the polyester contained in the sheet manufacturing binding material of this embodiment, for example, there may be mentioned a batch-type manufacturing apparatus, such as a reaction chamber, equipped with a nitrogen inlet port, a thermometer, a stirring device, a rectification tower, and the like. In addition, for example, an extruder having a deaeration port, a continuous reaction apparatus, or a kneading machine may also be used. In addition, when the above dehydration condensation is performed, if needed, the esterification reaction can be promoted by reducing the pressure of a reaction system. In particular, since the polyester can be efficiently obtained, there may be preferably used a method, that is, a so-called batch charge method, in which after the polyvalent alcohol and the polybasic acid, each of which functions as the raw material, are dissolved and mixed together, an esterification catalyst is appropriately added, and a reaction is then performed by increasing the temperature.

When the polyester contained in the sheet manufacturing binding material of this embodiment is manufactured, if polycondensation is performed under the presence of a titanium compound to which a phosphorus compound covalent-bonded and/or a titanium compound to which a phosphorus compound coordinate-bonded, the polyester thus obtained may be suppressed from being colored in some cases, and hence, the polycondensation described above is more preferable.

### 1.2. Physical Properties of Polyester

### 1.2.1 Pulverization Index

A pulverization index of the polyester contained in the sheet manufacturing binding material of this embodiment is 0.10 to 0.90, preferably 0.20 to 0.80, more preferably 0.30 to 0.80, and further preferably 0.35 to 0.75. The value of the pulverization index of the resin according to the present disclosure is the index which indicates, under specific conditions, the degree of easiness of pulverization, that is, the degree of difficulty of pulverization.

The pulverization index of the resin is measured, for example, as described below.
(1) First, 3 kg of a lump resin is pulverized with a hammer into blocks having a size of approximately 5 mm.
(2) The resin thus pulverized is charged in a feather mill ("FM-1S", manufactured by Hosokawa Micron Corporation) equipped with standard hammers (16 pieces) and a screen having a pore diameter of 10 mm, and a pulverizing treatment is performed at a revolution rate of 900 rpm, so that resin particles, all of which pass through 8-mesh screen (opening: 2.36 mm), are obtained.
(3) Next, after 150 g of the resin particles is charged in a Waring blender ("7012S", manufactured by Waring Products Corp.) equipped with a stainless steel-made container (CAC33 type) and a cutter (SS1100 type), a treatment is performed for 60 seconds at a cutter revolution rate of 13,000 rpm.
(4) This resin thus treated is sieved with a 12-mesh sieve (opening: 1.4 mm), and 70 g of a resin passing through the sieve is measured and charged in a high speed mill ("HS-10", manufactured by Scenion Inc.). Subsequently, the mill is equipped with a standard pulverizing blade, and a cycle in which a pulverizing treatment is performed for 30 seconds at a revolution rate of 30,000 rpm and is then stopped for 180 seconds is continuously performed three times.
(5) Next, after M (g) of the resin thus treated is charged in a 32-mesh sieve (diameter: 200 mm) (JIS standard), and the sieve is equipped with an electromagnetic sieve shaker AS200 ("AS200", manufactured by Retsch), sieving is then performed for 20 minutes at a magnitude of 2 mm.
(6) After a mass R (g) of residues (remaining on the sieve) on the 32-mesh sieve (opening: 500 µm) is measured, D=(M-R)/M is calculated, so that a pulverization index D is obtained.

The pulverization index D is in a range of 0≤D≤1, and a larger D indicates a higher pulverizability. Although M may be appropriately selected, M is preferably in a range of 10 to 50 g and is, for example, set to 30 g. (7) The operation described above is repeatedly performed three times, and an average pulverization index D is obtained.

In the case described above, for the measurement of the mass R remaining on the sieve, in order to accurately measure the mass R of the resin remaining on the sieve, the change in mass of the entire system is preferably measured before and after the sieving. In addition, prior to the measurement of the mass of the system after the sieving, when a resin adhered to the lower side of the sieve by static electricity is gently wiped out using an antistatic brush, more accurate measurement can be performed. In addition, the pulverization index may also be calculated by measuring the mass of the resin passing through the sieve. In this case, the mass of the resin adhered to the lower side of the sieve may be difficult to measure in some cases, and hence, in general, the pulverization index is obtained using the mass remaining on the sieve.

Since the pulverization index D of the polyester contained in the sheet manufacturing binding material of this embodiment is in the range described above, when the polyester is melted, and fibers are bound to each other to form a sheet, the polyester is not likely to be fractured (destroyed), and a sheet having a high mechanical strength can be obtained. In addition, since the pulverization index D of the polyester contained in the sheet manufacturing binding material of this embodiment is in the range described above, a process to form the polyester into a powder can be more easily performed. In addition, when the pulverization index D is in the range described above, the tensile strength of a sheet to be formed and a powder processability of the polyester can be simultaneously obtained.

### 1.2.2. Glass Transition Temperature

In order to obtain a sheet excellent in heat resistance, the lower limit of a glass transition temperature (Tg) of the polyester contained in the sheet manufacturing binding material of this embodiment is preferably 65.0°C or more and more preferably 70.0°C or more, and the upper limit thereof is preferably 85.0°C or less. When the glass transition temperature is 65°C or more, softening of the sheet manufacturing binding material at a high temperature is suppressed, and a sheet having a high rigidity at a high temperature can be obtained. In addition, storage stability in the state in which the sheet manufacturing binding material is filled in a receiving container can be enhanced.

The glass transition temperature (Tg) of the polyester is a value measured under the following conditions. By the use of a differential scanning calorimeter ("DSC-220C", manufactured by Seiko Instruments Inc.), 10 mg of a sample is measured on an aluminum pan. In a first temperature increase step in which the temperature is increased from 20°C to 150°C at a temperature increase rate of 10°C/min and is then maintained at 150°C for 10 minutes, a temperature decrease step in which the temperature is decreased from 150°C to 0°C at a temperature decrease rate of 10°C/min and is maintained at 0°C for 10 minutes, and a second temperature increase step in which the temperature is increased from 0°C to 150°C at a temperature increase rate of 10°C/min, an intersection point between a line extended from a base line of the second temperature increase step at a lower temperature side and a tangent line drawn at a point of the curve of a step-wise change portion of the glass transition at which the slope is maximized is regarded as the glass transition temperature.

### 1.2.3. Softening Temperature

Since a heat press temperature at which the sheet is formed can be further decreased, the upper limit of a softening temperature (Tm) of the polyester contained in the sheet manufacturing binding material of this embodiment is preferably 130.0°C or less, more preferably 125.0°C or less, further preferably 120.0°C or less, particularly preferably 119.0°C or less, even further preferably 115.0°C or less, and most preferably 114.0°C or less, and since the storage stability is excellent, the lower limit of the softening temperature (Tm) is preferably 90.0°C or more, more preferably 100.0°C or more, and further preferably 107.0°C or more. When the softening temperature of the polyester is 130.0°C or less, as a heating treatment for manufacturing a sheet using the sheet manufacturing binding material, a continuous high speed treatment using a heating roller machine is likely to be used, and the productivity of the sheet can be improved.

The softening temperature (Tm) of the polyester is a value measured under the following conditions. By the use of a Koka-type flow tester ("CFT-500D", manufactured by Shimadzu Corporation), while being heated at a temperature increase rate of 5°C/min, 1.1 g of a sample is extruded from a nozzle having a diameter of 1 mm and a length of 1mm by applying a load of 20 kg. A stroke is plotted with the temperature, and a temperature at which a half of the sample flows out is regarded as the softening temperature.

### 1.2.4. Ratio of Softening Temperature to Glass Transition Temperature

The polyester contained in the sheet manufacturing binding material of this embodiment tends to have a low softening temperature and a high glass transition temperature relative to those of a polyester which has been used in the past. Hence, a sheet obtained from the polyester described above tends to have a practically sufficient heat resistance and to be easily formed at a low temperature. From the point described above, the upper limit of the ratio of the softening temperature (Tm) to the glass transition temperature (Tg), that is, the upper limit of Tm/Tg (°C/°C), is preferably 1.75 or less, more preferably 1.70 or less, and further preferably 1.69 or less, and the lower limit thereof is preferably 1.40 or more, more preferably 1.45 or more, and further preferably 1.50 or more.

### 1.2.5. Molecular Weight

Although the molecular weight of the polyester contained in the sheet manufacturing binding material of this embodiment is not particularly limited, in order to increase the glass transition temperature and to decrease the softening temperature, the lower limit of a weight average molecular weight (Mw) is preferably 5,000 or more and more preferably 8,000 or more, and the upper limit thereof is preferably 30,000 or less and more preferably 15,000 or less. In addition, from the same point as described above, the lower limit of a number average molecular weight (Mn) is preferably 1,000 or more and more preferably 2,000 or more, and the upper limit thereof is preferably 10,000 or less and more preferably 5,000 or less.

Although the polydispersity of the molecular weight of the polyester contained in the sheet manufacturing binding material of this embodiment is not particularly limited, in order to increase the glass transition temperature and to decrease the softening temperature, the lower limit of the ratio (Mw/Mn) of the weight average molecular weight (Mw) to the number average molecular weight (Mn) measured by a gel permeation chromatography (GPC) is preferably 2 or more, more preferably 2.5 or more, and further preferably 3 or more, and the upper limit thereof is preferably 30 or less and more preferably 10 or less.

In addition, the number average molecular weight (Mn), the weight average molecular weight (Mw), and the polydispersity (Mw/Mn) of the molecular weight can be measured by a gel permeation chromatography (GPC) under the following conditions.

Measurement Apparatus: HLC-8320GPC, manufactured by Tosoh Corporation
Column: TSKgel 5000HXL, TSKgel 4000HXL, TSKgel 3000HXL, and TSKgel 2000HXL, manufactured by Tosoh Corporation
Detector: RI (differential refractometer)
Data Processing: Multistation GPC-8020 model II, manufactured by Tosoh Corporation
Measurement Conditions: column temperature: 40°C, solvent: tetrahydrofuran, and flow rate: 1.0 ml/min
Standard: monodisperse polystyrene
Sample: sample obtained by filtration of a tetrahydrofuran solution containing 0.5 percent by mass of a resin solid component using a microfilter (100 µl)

### 1.2.6. Acid Value

Although the acid value of the polyester contained in the sheet manufacturing binding material of this embodiment is not particularly limited, in order to increase the glass transition temperature of the polyester and to decrease the softening temperature thereof, the lower limit of the acid value is preferably 10 mgKOH/g or more and more preferably 13 mgKOH/g or more, and the upper limit thereof is preferably 30 mgKOH/g or less and more preferably 25 mgKOH/g or less.

In addition, the acid value can be measured in accordance with JIS K0070-1992 (neutralization titration method) using tetrahydrofuran as a solvent.

### 1.3. Physical Properties of Powder of Polyester

The polyester contained in the sheet manufacturing binding material of this embodiment is in the form of a powder, and the sheet manufacturing binding material is also in the form of a powder. The sheet manufacturing binding material may be the powder of the polyester itself. Hereinafter, the powder of the polyester of this embodiment may be simply called "polyester powder" in some cases.

The polyester powder is manufactured by pulverizing the polyester described above. The polyester powder may be manufactured by pulverizing a blend formed from at least one of various resins and the polyester, may be further granulated and then pulverized, or may be classified after being pulverized.

A method for pulverizing the polyester is not particularly limited, and the polyester in the form of lumps or pellets may be pulverized, for example, using an FM mixer, a Henschel mixer, a super mixer, a turbo mill, a roller mixer, a jet mill, a hammer mill, or a pin mill. In addition, the pulverization treatment may be performed while cooling is performed. Furthermore, in the manufacturing of the polyester powder, mixing with other materials may also be performed, or a step of manufacturing an additive may also be performed. In addition, when the polyester is manufactured, if an emulsion polymerization can be used, the pulverization step may be not required in some cases.

A volume basis average particle diameter (hereinafter, simply referred to as "average particle diameter" in some cases) of particles of the polyester powder is preferably 50.0 µm or less, more preferably 30.0 µm or less, further preferably 25.0 µm or less, and particularly preferably 20.0 µm or less. When the average particle diameter is small, the gravity acting on the polyester powder is decreased, and hence, the polyester is suppressed from withdrawing from between fibers by its own weight, and in addition, since the air resistance is decreased, the withdrawal of the polyester from between the fibers by a wind generated by a suction mechanism or the like and/or the withdrawal thereof caused by mechanical vibration can be suppressed. In addition, when being in the above particle diameter range, the polyester powder is not likely to withdraw from the fibers and is able to bind the fibers to each other.

In addition, although the lower limit of the average particle diameter of the polyester powder is not particularly limited, the lower limit is, for example, 5.0 µm and preferably 10.0 µm and may be arbitrarily determined within a range in which the powder can be formed by a method, such as pulverization.

In addition, the average particle diameter of the particles of the polyester powder may have a distribution. However, when the rate of particles having an average particle diameter of 5.0 µm or less is high, since this type of polyester tends to withdraw from the fibers, and the loss of the polyester is increased, the rate of the particles having an average particle diameter of 5.0 µm or less is 30% or less and preferably 20% or less. In addition, when the particle diameter distribution of the polyester powder is broad, the polyester powder may be used after coarse particles and fine particles are removed by classification. In addition, since fine powders of the polyester powder are liable to be aggregated in some cases, when aggregated powders are contained, it is preferable that an aggregation suppressor (such as silicon oxide fine particles) which will be described below is used with the polyester powder, or that the aggregated powders are removed by classification.

In addition, the average particle diameter of particles in which the particles of the polyester powder are integrated with an aggregation suppressor and a coloring material, each of which will be described later, may also be similar to that described above. In addition, when the volume basis average particle diameter of the particles of the sheet manufacturing binding material is 20.0 µm or less, if the particles are mixed with the fibers, since the weight of the powder is low, the influence of the gravity is not likely to be applied thereon, and the withdrawal of the particles from the fibers may be suppressed in some cases. In addition, when the particle diameter is set to be smaller than the width of the fibers, the binding material is likely to be dispersed between the fibers, and mixing with the fibers is more easily performed. Accordingly, a sheet which has preferable tensile strength and rigidity and in which the tensile strength and the rigidity are not irregularly distributed is more likely to be realized.

The volume basis average particle diameter of the particles of the polyester powder can be measured, for example, by a particle size distribution measurement apparatus which uses a laser diffraction scattering method as a measurement principle. As the particle size distribution measurement apparatus, for example, a particle size distribution meter (such as "Microtrack UPA", manufactured by Nikkiso Co., Ltd.) using a dynamic light scattering method as a measurement principle may be mentioned. In addition, a particle-size cumulative frequency based on the number of particles can be obtained, for example, by dispersing the particles in water using a wet-type flow-type particle diameter and shape analyzer (trade name "FPIA-2000", manufactured by Sysmex Corporation).

### 1.4. Other Components

The sheet manufacturing binding material of this embodiment may contain the following components other than the polyester described above.

### 1.4.1. Aggregation Suppressor

**The** sheet manufacturing binding material of this embodiment may contain an aggregation suppressor. When the aggregation suppressor is blended in the sheet manufacturing binding material, compared to the case in which no aggregation suppressor is blended, the aggregation suppressor has a function so that at least one type of particles (hereinafter, referred to as "particles and the like" in some cases), that is, at least one type of particles of the polyester included in the sheet manufacturing binding material, particles integrally including the polyester and the aggregation suppressor, particles integrally including the polyester and a coloring material, and particles integrally including the polyester, the coloring material, and the aggregation suppressor, is not likely to be aggregated. As the aggregation suppressor, although various types of materials may be used, since the sheet manufacturing binding material of this embodiment is used in an environment in which water is not used or hardly used, an aggregation suppressor which is to be arranged on the surfaces of the particles is preferably used.

As the aggregation suppressor described above, fine particles formed from an inorganic material may be mentioned, and when this material is arranged on the surfaces of the particles and the like contained in the sheet manufacturing binding material, a significantly excellent aggregation suppressing effect can be obtained.

In addition, the aggregation indicates the state in which the same type or different types of materials are present in contact with each other by an electrostatic force or a Van der Waals force. In addition, in an assembly (such as a powder) of a plurality of substances, the state in which the substances are not aggregated does not always indicate the state in which all the substances forming this assembly are arranged separately from each other. That is, in the state in which the substances are not aggregated, the state in which the substances forming the assembly are partially aggregated is also included. Even when the amount of the substances aggregated as described above is 10.0 percent by mass or less of the total assembly and is preferably 5.0 percent by mass or less thereof, this state is included in a "non-aggregated state" in the assembly of the plurality of substances. Furthermore, for example, when the powder is filed in a container, although the particles of the powder are present in contact with each other, if the particles can be separated from each other by applying an external force, such as mild stirring, dispersion by an air stream, and free falling, at a level at which the particles are not destroyed, this state is also included in the non-aggregated state.

As a concrete example of the material of the aggregation suppressor, for example, there may be mentioned silica, titanium oxide, aluminum oxide, zinc oxide, cerium oxide, magnesium oxide, zirconium oxide, strontium titanate, barium titanate, or calcium carbonate. In addition, although some of the materials of the aggregation suppressor may be the same material as that of the coloring material which will be described later, the particle diameter of the aggregation suppressor is smaller than that of the coloring material, and this is the point at which the aggregation suppressor is different from the coloring material. Hence, the aggregation suppressor has not a significant influence on a color tone of a sheet to be manufactured, and hence, in this specification, the aggregation suppressor can be discriminated from the coloring material described below. However, when the color tone of the sheet is adjusted, even if the particle diameter of the aggregation suppressor is small, an effect, such as slight light scattering, may be generated in some cases, and hence, the effect as described above is more preferably taken into consideration.

Although being not particularly limited, for example, the number average particle diameter of the particles of the aggregation suppressor is preferably 0.001 to 1 µm and more preferably 0.008 to 0.6 µm. Since the particle diameter of the particles of the aggregation suppressor is small similar to that of so-called nano-particles, the particles of the aggregation suppressor are generally primary particles; however, highly ordered particles may also be formed by bonding a plurality of primary particles. When the particle diameter of the primary particles of the aggregation suppressor is in the range described above, coating can be preferably performed on the surfaces of the polyester particles contained in the sheet manufacturing binding material, and a sufficient aggregation suppressing effect can be obtained.

When the aggregation suppressor is added to the sheet manufacturing binding material, if the addition amount of the aggregation suppressor with respect to 100 parts by mass of the sheet manufacturing binding material is set to 0.1 to 5 percent by mass, the effect described above can be obtained. In addition, for example, in order to enhance the effect described above and/or to suppress the withdrawal of the aggregation suppressor from the sheet, the addition amount of the aggregation suppressor with respect to 100 parts by mass of the sheet manufacturing binding material is set to preferably 0.2 to 4 percent by mass and more preferably 0.5 to 3 percent by mass.

A method to arrange (coat) the aggregation suppressor on the surfaces of the particles contained in the sheet manufacturing binding material is not particularly limited, and by melt kneading or the like, the aggregation suppressor may be blended together with the polyester. However, by the method described above, since a larger part of the aggregation suppressor is arranged inside the particles of the polyester, the aggregation suppressing effect with respect to the addition amount of the aggregation suppressor may be decreased in some cases.

In consideration of the aggregation suppressing mechanism, the aggregation suppressor is more preferably arranged as much as possible on the surfaces of the particles and the like contained in the sheet manufacturing binding material. As a method to arrange the aggregation suppressor on the surfaces of the particles and the like contained in the sheet manufacturing binding material, although coating, covering, and the like may be mentioned, the entire surfaces of the particles and the like contained in the sheet manufacturing binding material are not always required to be covered. In addition, although the coverage may be more than 100%, when the coverage is 300% or more, the function to bind the sheet manufacturing binding material and the fibers may be degraded in some cases, and hence, the coverage is appropriately selected in consideration of the situation.

As the method to arrange the aggregation suppressor on the surfaces of the particles and the like contained in the sheet manufacturing binding material, although various methods may be performed, by simply mixing the two types of materials with each other, the aggregation suppressor is adhered to the surfaces of the particles by an electrostatic force or a Van der Waals force, and the effect described above can be obtained; however, the withdrawal of the aggregation suppressor may occur in some cases. Hence, for example, a method in which the particles of the polyester and the aggregation suppressor are charged in a high rotation mixer to perform uniform mixing is preferable. As the apparatus described above, a known apparatus may be used, and for example, an FM mixer, a Henschel mixer, or a super mixer may be used.

By the method as described above, the particles of the aggregation suppressor can be arranged on the surfaces of the particles and the like contained in the sheet manufacturing binding material. Since at least some of the particles of the aggregation suppressor arranged by the method as described above may be arranged so as to get into or intrude into the surfaces of the particles and the like contained in the sheet manufacturing binding material in some cases, the aggregation suppressor can be suppressed from easily withdrawing from the sheet manufacturing binding material, so that the aggregation suppressing effect can be stably obtained. In addition, when the method as described above is used, in the system in which water is not contained or hardly contained, the arrangement described above can be easily realized. In addition, even when there are particles which do not get into the particles contained in the sheet manufacturing binding material, the effect as described above can be sufficiently obtained.

The particles in the state in which the aggregation suppressor is arranged so as to strongly adsorb on or get into the surfaces of the particles and the like are called particles which integrally include the polyester and the aggregation suppressor. The state in which the particles of the aggregation suppressor get into or intrude into the surfaces of the particles and the like contained in the sheet manufacturing binding material may be confirmed by various types of electron microscopes.

When a covering rate (area rate: in this specification, this rate is called "coverage" in some cases) which is a rate of the aggregation suppressor covering the surfaces of the particles and the like contained in the sheet manufacturing binding material is set to 20.0% to 100.0%, a sufficient aggregation suppressing effect can be obtained. The coverage may be adjusted by charge amounts of the raw materials to the apparatus, such as an FM mixer. Furthermore, when the specific surface areas of the aggregation suppressor, the particles, and the like are known, the coverage may be adjusted by the masses (weights) of the individual components to be charged. In addition, the coverage can also be measured by various electron microscopes. In addition, when the aggregation suppressor is arranged so as not to easily withdraw from the sheet manufacturing binding material, it may also be said that the aggregation suppressor is integrally included in the polyester.

When the aggregation suppressor is blended in the sheet manufacturing binding material, the aggregation of the sheet manufacturing binding material is made significantly difficult to occur; hence, for example, in a mixing portion of a sheet manufacturing apparatus which will be described later, the sheet manufacturing binding material and the fibers can be more easily mixed together. That is, when the aggregation suppressor is blended in the sheet manufacturing binding material, the sheet manufacturing binding material rapidly diffuses in the space and is able to form a very uniform mixed material. In addition, when the aggregation suppressor is blended in the sheet manufacturing binding material, in the case in which the sheet manufacturing binding material is filled and stored in a container or the like, the storage stability may be improved in some cases in terms of the aggregation.

In addition, since the particles which integrally include the polyester and the aggregation suppressor are contained, the fluidity of the sheet manufacturing binding material is increased, the aggregation of the binding material is suppressed, and the storage stability thereof is improved when the sheet manufacturing binding material is filled in a receiving container. In addition, since the thermal conductivity of silica used as the aggregation suppressor is higher than that of the resin, a function to decrease the softening temperature can be anticipated, and a heating load (temperature and time) in the sheet manufacturing can be reduced.

One reason the sheet manufacturing binding material and the fibers can be very preferably mixed together by the aggregation suppressor with an air flow or stirring by a mixer is that when the aggregation suppressor is arranged on the surfaces of the particles and the like, the particles and the like tend to be charged with static electricity. By this static electricity, the aggregation of the sheet manufacturing binding material is suppressed. By the tendency described above, it is believed that when the aggregation suppressor is blended in the sheet manufacturing binding material, the sheet manufacturing binding material which is once adhered to the fibers is not likely to withdraw therefrom, and hence, without using a specific method other than the mixing between the fibers and the sheet manufacturing binding material, rapid mixing can be realized. In addition, after the mixing is performed, the adhesion of the sheet manufacturing binding material to the fibers is stable, and a withdrawal phenomenon of the sheet manufacturing binding material is not likely to occur.

### 1.4.2. Coloring Material

The sheet manufacturing binding material of this embodiment may contain a coloring material. When blended in the sheet manufacturing binding material, the coloring material has a function to adjust a color tone of a sheet to be formed, and for example, a sheet having a different color can be easily manufactured by a dry sheet manufacturing method. In addition, the particles of the sheet manufacturing binding material are preferably placed in a state in which the polyester and the coloring material are integrally included.

The state in which the particles integrally include the polyester and the coloring material indicates a state in which the polyester particles and/or the coloring material is not likely to withdraw from the sheet manufacturing binding material in at least one of the sheet manufacturing apparatus and the sheet to be manufactured. That is, the state in which the sheet manufacturing binding material integrally includes the polyester and the coloring material indicates a state in which particles of the coloring material are adhered to each other by the polyester; a state in which the coloring material is structurally fixed to the polyester particles; a state in which the polyester particles and the coloring material are aggregated by an electrostatic force, a Van der Waals force, or the like; and a state in which the polyester and the coloring material are chemically bonded to each other. In addition, the state in which the sheet manufacturing binding material integrally includes the polyester and the coloring material may also indicate a state in which the coloring material is enclosed by the polyester particles or a state in which the coloring material is adhered to the polyester particles and, furthermore, may also include a state in which the two states described above are simultaneously present.

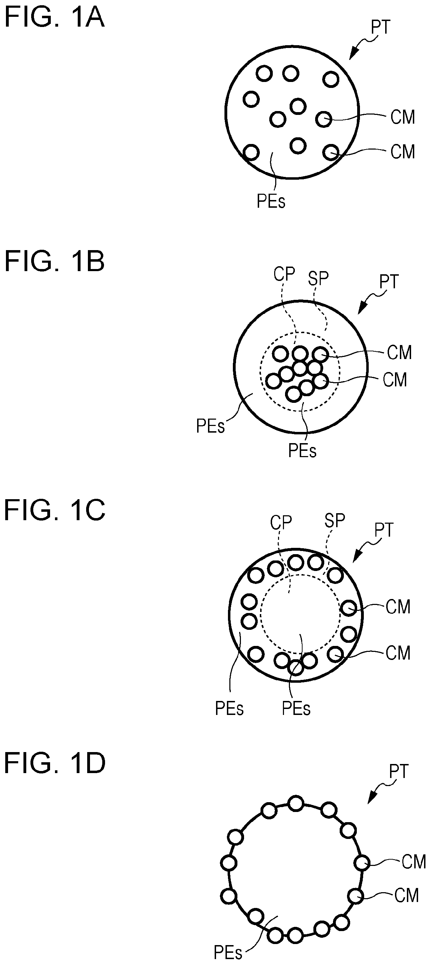

FIGS. 1A to 1D schematically show several structures of cross-sections of particles each of which integrally includes the polyester and the coloring material. As one example of the structure of the particle which integrally includes the polyester and the coloring material, as shown in FIGS. 1A to 1C, a particle PT having a structure in which at least one particle of a coloring material CM is dispersed and enclosed in a polyester PEs may be mentioned, and as shown in FIG. D, a particle PT in which at least one particle of a coloring material CM is adhered to the surface of a polyester PEs may be mentioned. As the sheet manufacturing binding material, an assembly (powder) of the particles PT as described above may be used.

FIG. 1A shows one example of the particle PT having a structure in which particles of the coloring material CM are dispersed in the polyester PEs forming the particle PT. In the particle PT as described above, a so-called sea-island structure in which the polyester PEs is used as a matrix, and the particles of the coloring material CM are dispersed as domains is formed. In this example, since the particles of the coloring material CM are surrounded by the polyester PEs, the coloring material CM is not likely to withdraw from the polyester PEs through a resin portion (matrix). Hence, when various treatments are performed in the sheet manufacturing apparatus, or when the sheet is formed, the coloring material CM is not likely to withdraw from a polyester PEs portion. In the case described above, as the dispersion state of the coloring material CM in the particle PT, the particles of the coloring material CM may be in contact with each other, or the polyester PEs may be present between the particles of the coloring material CM. In addition, although the particles of the coloring material CM are dispersed entirely in the particle PT as shown in FIG. 1A, the particles may be locally dispersed. For example, in FIG. 1A, the particles of the coloring material CM may be dispersed only at the right side or the left side. As the case in which the particles of the coloring material are locally dispersed, as shown in FIG. 1B, the coloring material CM may be arranged at a central portion of the polyester PEs, or as shown in FIG. 1C, the coloring material CM may be arranged in the vicinity of the surface of the polyester PEs. In addition, the polyester PEs may have a core particle CP at a central portion and a shell SP along the periphery thereof. In this case, the core particle CP and the shell SP may be formed from different polyesters, or one of them may be formed from a polyester and the other may be formed from a different resin.

In the example shown in FIG. 1D, a particle PT having a structure in which the particles of the coloring material CM are embedded in the vicinity of the surface of the particle formed from the polyester PEs is shown. In this example, although the coloring material CM is exposed to the surface of the particle PT, by adhesion (chemical and/or physical bond) to the polyester PEs, or by mechanical fixing by the polyester PEs, the coloring material CM is not likely to withdraw from the particle PT, and the particle PT as described above may also be contained in the sheet manufacturing binding material as the particle PT which integrally includes the polyester PEs and the coloring material CM. In addition, in this example, the coloring material CM may be present not only at the surface of the polyester PEs but also inside thereof.

Although several structures of the particles each integrally including the polyester and the coloring material are described by way of example, when various treatments are performed in the sheet manufacturing apparatus, or when the sheet is formed, as long as the coloring material is not likely to withdraw from the particle, the structure is not limited to those described above. In addition, even when the coloring material is adhered to the surface of the particle by an electrostatic force or a Van der Waals force, if the coloring material is not likely to withdraw from the particle, this structure is also usable. In addition, if the coloring material is not likely to withdraw from the particle, a structure in which the above structures are used in combination may also be used.

The coloring material has a function to enable a sheet manufactured by the sheet manufacturing binding material of this embodiment to have a predetermined color. As the coloring material, a dye or a pigment may be used, and when the coloring material is integrated with the polyester in the sheet manufacturing binding material, in order to obtain preferable covering power and chromogenic property, a pigment is preferably used. In addition, when a dye is selected as the coloring material, a particle formed by mixing the dye with the polyester may be regarded as a particle integrally including the polyester and the coloring material.

As a pigment which can be used as the coloring material, the color and the type thereof are not particularly limited, and for example, pigments having various colors (white, blue, red, yellow, cyan, magenta, black, specific color (such as pearl or metallic luster), which are to be used for general inks, may be used. The pigment may be either an inorganic pigment or an organic pigment. As the pigment, known pigments disclosed in JP-A-2012-87309 and JP-A-2004-250559 may be used. In addition, for example, a white pigment, such as zinc flower, titanium oxide, antimony white, zinc sulfide, clay, silica, white carbon, talc, or alumina white, may also be used. Those pigments may be used alone, or at least two types thereof may be used after being appropriately mixed together. In addition, when a white pigment is used, among those mentioned above by way of example, the use of a pigment formed from a powder containing particles (pigment particles) using titanium oxide as a primary component is more preferable. The reason for this is that because of a high refractive index of titanium oxide, the degree of whiteness of a sheet S to be manufactured can be easily increased by a small addition amount.

In addition, in this specification, the term "coloring material" is used to indicate a material to be used for coloration. In addition, in this specification, the term "pigment" also indicates a powder in which unit particles (pigment particles) are collected together. In addition, the term "unit particle (pigment particle)" indicates a particle, the size of which cannot be easily reduced by a general pulverizing device. For example, in the case of a white pigment formed from titanium oxide, a microcrystal of titanium oxide is regarded as a primary particle, and the unit particle (pigment particle) thereof may be formed from a plurality of the primary particles. In this case, since the primary particles may be aggregated by forming chemical bonds or twin crystals in some cases, mechanically pulverization thereof is difficult in many cases. In addition, the structure of one pigment particle itself may be a primary particle or a bonded body of the primary particles.

Even when any one of the structures shown in FIGs. 1A to 1D is used, a method which enables the particle to integrally include the polyester and the coloring material is not particularly limited, and a known method may be appropriately used. As one example, a method to obtain the particle having the structure shown in FIG. 1A will be described. As the method to obtain the particle having the structure shown in FIG. 1A, for example, there may be mentioned a melt kneading method in which a predetermined polyester is heated to a softening temperature or more and then kneaded with a pigment (coloring material) or a method in which a polyester is dissolved or swelled with water or a solvent and then mixed with a pigment. As an apparatus usable for those methods, for example, there may be mentioned a kneader, a banbury mixer, a single screw extruder, a multi-screw extruder, a two-roll mill, a three-roll mill, a continuous kneader, or a continuous two-roll mill. When those methods are used, in order to more uniformly disperse the pigment in the particles, the pigment may be processed by a hydrophobic treatment. Alternatively, when aggregates of the pigment are present, before the melt kneading, pulverization of the aggregates by a mixer or the like is effective to more uniformly disperse the pigment in the particles.

In addition, after the kneading is performed, palletizing is performed by an appropriate method, followed by pulverizing, so that the sheet manufacturing binding material can be obtained. For the pulverization, a known pulverizing method may be used. As a pulverizing machine to be used, for example, there may be mentioned a hammer mill, a pin mill, a cutter mill, a pulverizer, a turbo mill, a disc mill, a screen mill, or a jet mill. By an appropriate combination of those machines mentioned above, the particles can be obtained. In addition, a pulverizing step may be performed in a stepwise manner so that after coarse pulverization is performed to obtain a particle diameter of approximately 1 mm, fine pulverization is performed to obtain a target particle diameter. Even in the case described above, in each step, the apparatus mentioned above by way of example may be appropriately used. Furthermore, in order to increase the efficiency of the pulverization of the particles, a freeze pulverization method may also be used. The sheet manufacturing binding material thus obtained may have various sizes in some cases, and in order to obtain a sheet manufacturing binding material having a target size, classification may be performed using a known classifier. When the methods as described above are used, a sheet manufacturing binding material containing a particle having the structure shown in FIG. 1A can be obtained.

In addition, although an approximately spherical shape is schematically shown as the outer shape of the particle of each of the examples shown in FIGS. 1A to 1D, the outer shape of the particle is not particularly limited, and for example, a shape, such as a disc, may also be used. However, since being more likely to be arranged between the fibers, a particle having an approximately sphere shape is more preferable.

Furthermore, in the sheet manufacturing binding material containing particles which integrally include the polyester and the coloring material, the aggregation suppressor described above may also be contained. In the case described above, a sheet manufacturing binding material containing particles which integrally include the polyester, the aggregation suppressor, and the coloring material is formed. According to the sheet manufacturing binding material as described above, the aggregation is suppressed, and in addition, a sheet to be manufactured can be colored.

When the coloring material is used, the content thereof in the sheet manufacturing binding material is preferably more than 0 to 50 percent by mass. When represented by "part(s) by mass" (external addition: addition amount of the coloring material to the polyester), the content of the coloring material in the sheet manufacturing binding material is more than 0 to 100 parts by mass. In order to obtain sufficient strength and color of a sheet to be manufactured, in order to suppress the withdrawal of the coloring material from the sheet manufacturing binding material, and in order to obtain a shape stability of the sheet manufacturing binding material, the content of the coloring material in the sheet manufacturing binding material is preferably 1 to 50 percent by mass, more preferably 2 to 30 percent by mass, and even more preferably 3 to 20 percent by mass.

### 1.4.3. Others

The sheet manufacturing binding material may contain other components. As the other components, for example, there may be mentioned an organic solvent, a surfactant, a fungicide/antiseptic agent, an antioxidant/UV absorber, and an oxygen absorber.

### 1.5. Method for Manufacturing Sheet Manufacturing Binding Material

A manufacturing method of this embodiment is a method for manufacturing the sheet manufacturing binding material described above. The sheet manufacturing binding material is manufactured by pulverizing the polyester described above, then if needed, removing coarse particles and fine particles by performing classification of a polyester powder obtained by the pulverization, and furthermore if needed, arranging (coating) the aggregation suppressor on the surfaces of the polyester. Alternatively, after the coloring material and the other components are mixed with the polyester in advance, the binding material can be manufactured.

The method for pulverizing the polyester is not particularly limited, a known method may be used, and for example, there may be used an FM mixer, a Henschel mixer, a super mixer, a turbo mill, a roller mill, a jet mill, a hammer mill, or a pin mill. A pulverizing step may be performed in a stepwise manner so that, for example, after coarse pulverization is performed to obtain a particle diameter of approximately 1.0 mm, fine pulverization is performed to obtain a target particle diameter. In addition, the pulverization treatment may be performed while cooling is performed. Furthermore, during the pulverization of the resin, mixing with other substances may also be performed, and/or a step of manufacturing an additive may also be performed.

In addition, a mixture in which the other substances, such as the coloring material and the aggregation suppressor, are mixed with the polyester in advance may be pulverized. A method to mix the coloring material and the aggregation suppressor with the polyester is not particularly limited, and a known method may be appropriately used. For example, a melt kneading method in which the polyester is heated to a softening temperature or more and then kneaded with the coloring material or a method in which the polyester is swelled with water or a solvent and then mixed with the coloring material may be used. For the methods described above, for example, there may be used a kneader, a banbury mixer, a single screw extruder, a multi-screw extruder, a two-roll mill, a three-roll mill, a continuous kneader, or a continuous two-roll mill. The mixed resin is appropriately palletized and then pulverized by the method described above.

The particle diameter (volume basis average particle diameter) of the particles of the polyester powder is preferably 50.0 µm or less, more preferably 30.0 µm or less, and particularly preferably 20.0 µm or less. The lower limit of the average particle diameter of the particles of the polyester powder is not particularly limited, is, for example, 5.0 µm, and may be in an arbitrary range of a powder which can be formed by a method, such as pulverization. In addition, the average particle diameter of the particles of the polyester powder may have a distribution.

When the particle diameter distribution of the polyester power is broad, the particles may be used after coarse particles and fine particles are removed by classification. A classification method is not particularly limited, and for example, various sieves, such as meshes, and a cyclone classifier may be used.

A method to arrange (coat) the aggregation suppressor on the surface of the polyester powder is not particularly limited, and the polyester and the aggregation suppressor may be mixed together by melt kneading or the like. Furthermore, uniform mixing may be preferably performed by charging the polyester powder and the aggregation suppressor in a mixer at a high revolution rate. By the method as described above, the particles of the aggregation suppressor can be arranged on the surface of the polyester powder.

### 1.6. Physical Properties of Sheet Manufacturing Binding Material

### 1.6.1. Glass Transition Temperature

In order to obtain a sheet having an excellent heat resistance, the lower limit of the glass transition temperature (Tg) of the sheet manufacturing binding material of this embodiment is preferably 65.0°C or more and more preferably 70.0°C or more, and the upper limit thereof is preferably 85.0°C or less. When the glass transition temperature is 65.0°C or more, softening of the sheet manufacturing binding material is suppressed at a high temperature, and a sheet having a high rigidity at a high temperature is obtained. In addition, the storage stability in the state in which the sheet manufacturing binding material is filled in a receiving container can be improved.

The glass transition temperature (Tg) of the sheet manufacturing binding material is regarded as a temperature measured under the following conditions. By the use of a differential scanning calorimeter ("DSC-220C", manufactured by Seiko Instruments Inc.), 10 mg of a sample is measured on an aluminum pan. In a first temperature increase step in which the temperature is increased from 20°C to 150°C at a temperature increase rate of 10°C/min and is then maintained at 150°C for 10 minutes, a temperature decrease step in which the temperature is decreased from 150°C to 0°C at a temperature decrease rate of 10°C/min and is maintained at 0°C for 10 minutes, and a second temperature increase step in which the temperature is increased from 0°C to 150°C at a temperature increase rate of 10°C/min, an intersection point between a line extended from a base line of the second temperature increase step at a lower temperature side and a tangent line drawn at a point of the curve of a stepwise change portion of the glass transition at which the slope is maximized is regarded as the glass transition temperature.

### 1.6.2. Softening Temperature of Sheet Manufacturing Binding Material

Since a heat press temperature at which the sheet is formed can be further decreased, the upper limit of the softening temperature (Tm) of the sheet manufacturing binding material of this embodiment is preferably 130.0°C or less, more preferably 125.0°C or less, further preferably 120.0°C or less, particularly preferably 119.0°C or less, even further preferably 115.0°C or less, and most preferably 114.0°C or less, and since the storage stability is excellent, the lower limit of the softening temperature thereof is preferably 90.0°C or more, more preferably 100.0°C or more, and further preferably 107.0°C or more. When the softening temperature of the polyester is 130.0°C or less, as a heating treatment for manufacturing the sheet using the sheet manufacturing binding material, a continuous high speed treatment using a heating roller machine is likely to be used, and hence, the productivity of the sheet can be improved.

The softening temperature (Tm) of the sheet manufacturing binding material is regarded as a value measured under the following conditions. By the use of a Koka-type flow tester ("CFT-500D", manufactured by Shimadzu Corporation), while being heated at a temperature increase rate of 5°C/min, 1.1 g of a sample is extruded from a nozzle having a diameter of 1 mm and a length of 1mm by applying a load of 20 kg. A stroke is plotted with the temperature, and a temperature at which a half of the sample flows out is regarded as the softening temperature.

### 1.6.3. Ratio of Softening Temperature to Glass Transition Temperature

The sheet manufacturing binding material of this embodiment tends to have a low softening temperature and a high glass transition temperature relative to those of a sheet manufacturing binding material which has been used in the past. Hence, a sheet obtained using the sheet manufacturing binding material described above tends to have a practically sufficient heat resistance and to be easily formed at a low temperature. From the point described above, the upper limit of the ratio of the softening temperature (Tm) to the glass transition temperature (Tg), that is, the upper limit of Tm/Tg (°C/°C), is preferably 1.75 or less, more preferably 1.70 or less, and further preferably 1.69 or less, and the lower limit thereof is preferably 1.40 or more, more preferably 1.45 or more, and further preferably 1.50 or more.

Hereinafter, the term, "sheet manufacturing binding material which binds fibers by a dry sheet-manufacturing method" used in this specification will be described. In this embodiment, the term, "sheet manufacturing binding material" indicates an agent which is adhered to fibers to bind the fibers to each other.

In this specification, the "dry sheet-manufacturing method" indicates a method in which after the sheet manufacturing binding material and fibers are mixed in a gas (that is, not in water but in a gas, such as in the air (air) or in an inert gas atmosphere of nitrogen or the like), while the fibers are bound to each other by melting a polyester component contained in the sheet manufacturing binding material using a heat press, a sheet-shaped or a board-shaped molded body is formed.

In more particular, the dry sheet-manufacturing method used in this specification may include, for example, a step of mixing fibers and the sheet manufacturing binding material containing the polyester of this embodiment in a gas to obtain a mixture, a step of allowing the mixture to fall down while the mixture is dispersed in a gas, a step of depositing the falling mixture in a gas to form a web shape or the like, and a step of melting the sheet manufacturing binding material containing the polyester of this embodiment by a heat press to form a sheet, and may further include, if needed, a step of drying the sheet, a step of winding the sheet in the form of a roll, a step of cutting the sheet, and a step of packing the sheet.

As a forming temperature in the heat press, for example, the upper limit is preferably 180°C or less and more preferably 150°C or less, and the lower limit is the softening temperature of the polyester or more. In addition, although a forming pressure in the heat press is not particularly limited as long as the fibers are thermal-bound to each other, the lower limit is preferably 50 kPa or more and more preferably 1 MPa or more, and the upper limit is preferably 50 MPa or less and more preferably 30 MPa or less. Since the fibers are heat-pressed in the temperature range and the pressure range described above, a sheet having a practically sufficient tensile strength can be obtained. In addition, a heating roller (heater roller) machine may also be regarded as one type of heat press.

Although the rate of the sheet manufacturing binding material with respect to the fibers is not particularly limited, with respect to 100 parts by mass of the total of the fibers and the polyester contained in the sheet manufacturing binding material, the lower limit of the polyester contained in the sheet manufacturing binding material is preferably 5 parts by mass or more, and the upper limit thereof is preferably 70 parts by mass or less and more preferably 50 parts by mass or less.

The fibers mixed with the sheet manufacturing binding material containing the polyester of this embodiment is not particularly limited, and various fiber materials may be used. As the fibers, for example, there may be mentioned natural fibers (animal fibers and plant fibers) and chemical fibers (organic fibers, inorganic fibers, and organic-inorganic composite fibers). In more particular, for example, there may be mentioned fibers formed from cellulose, silk, wool, cotton, hemp, kenaf, flax, ramie, jute, manila hemp, sisal hemp, acicular tree, or broadleaf tree; fibers formed from rayon, lyocell, cupra, vinylon, acryl, nylon, aramid, polyester, polyethylene, polypropylene, polyurethane, polyimide, carbon, glass, or metal; or regenerated fibers formed from waste paper, waste cloth, or the like. Those mentioned above may be used alone, or at least two types thereof may be used after being appropriately mixed together, and in addition, fibers processed by a purification treatment may also be used. At least one type among those fibers mentioned above may be included. In addition, the fibers may be dried, or the fibers may contain a liquid, such as water or an organic solvent, or may be impregnated therewith. In addition, various surface treatments may be performed on the fibers. In addition, the material of the fibers may be either a pure material or a material containing a plurality of components, such as an impurity, an additive, and other components.

When the fibers are each regarded as one independent fiber, the average diameter thereof (in the case in which the cross-section thereof is not circle, the maximum length among the lengths orthogonal to the longitudinal direction or the diameter (equivalent circle diameter) of a circle which is assumed to have an area equivalent to that of the cross-section is used) is 1 to 1,000 µm, preferably 2 to 500 µm, and more preferably 3 to 200 µm. Although the length of the fiber is not particularly limited, the length of one independent fiber along the longitudinal direction is 1 µm to 5 mm, preferably 2 µm to 3 mm, and more preferably 3 µm to 2 mm.

When the lengths of the fibers are short, since the fibers are not likely to be bound to the polyester, the strength of the sheet may be insufficient in some cases; however, when the length is in the range described above, a sheet having a sufficient strength can be obtained. In addition, the average length of the fibers, that is, the weighted average fiber length of the fibers, is 20 to 3,600 µm, preferably 200 to 2,700 µm, and more preferably 300 to 2,300 µm. Furthermore, the lengths of the fibers may have a deviation (of distribution), and in the distribution in which the number of fibers is 100 or more, when the normal distribution of the lengths of independent fibers is assumed, σ may be 1 to 1,100 µm, preferably 1 to 900 µm, and more preferably 1 to 600 µm.

The width and the length of the fiber can be measured by various type of optical microscopes, scanning electron microscopes (SEM), transmission electron microscopes, fiber testers, and the like.

Since, the sheet obtained by using the sheet manufacturing binding material of this embodiment contains a polyester having a low softening temperature and a high glass transition temperature as a primary component, a heat press temperature can be further decreased, and hence, a molded body to be obtained is suppressed from being burned or deformed to form a blister or the like by heat. In addition, since the glass transition temperature is high, the rigidity at a high temperature of the sheet to be formed is excellent. In addition, since the glass transition temperature is high, the pulverizing processing of the polyester can be more easily performed. Furthermore, when the aggregation suppressor is contained in the sheet manufacturing binding material of this embodiment, and when the particles integrally including the polyester and the aggregation suppressor are contained, the sheet manufacturing binding material is not likely to be aggregated, and hence, the storage stability thereof is further improved.

### 2. Receiving Container

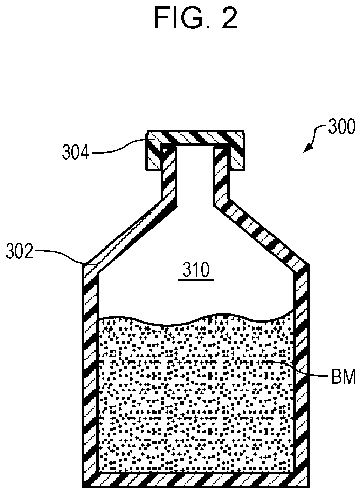

A receiving container of this embodiment receives the above sheet manufacturing binding material which is to be mixed with the fibers. FIG. 2 is a schematic view showing one example of the receiving container of this embodiment. A receiving container 300 of this embodiment shown in FIG. 2 is formed of a container body 302, a container lid 304, and a receiving room 310 in which a sheet manufacturing binding material BM is received.

The container body 302 forms the receiving room 310 inside. The sheet manufacturing binding material BM is received in the receiving room 310. The receiving container 300 of this embodiment can be regarded as a cartridge of the sheet manufacturing binding material BM, and the sheet manufacturing binding material BM can be easily transported and stored thereby.

The sheet manufacturing binding material of this embodiment may be supplied to a mixing portion 50 by opening and/or closing a feeder or a valve of a sheet manufacturing apparatus 100 which will be described later. The sheet manufacturing binding material of this embodiment is supplied in the form of a powder as the appearance. Hence, for example, the apparatus may be configured so that after being manufactured, the sheet manufacturing binding material is directly supplied to the mixing portion 50 through a tube or the like. However, dependent on the place at which the apparatus is installed, since the sheet manufacturing binding material may be handled as a commercial product in some cases through distribution channels, after the sheet manufacturing binding material is manufactured, the transport and/or the storage thereof may be performed in some cases.

The shape of the receiving container 300 is not particularly limited, and for example, a cartridge shape adaptable to the sheet manufacturing apparatus 100 may be formed. The receiving container 300 may be formed, for example, from a general high molecular weight material. In addition, the receiving container 300 may have either a box-shaped robust form or a film-shaped flexible form. In the example shown in FIG. 2, a bottle-shaped container is shown. In addition, a material forming the receiving container is not particularly limited. In addition, in the example shown in FIG. 2, although the container lid 304 is shown, as long as the receiving room 310 is formed in the receiving container 300, the container lid 304 is an arbitrary component.

As long as receiving and storing the sheet manufacturing binding material BM, the receiving room 310 receiving the sheet manufacturing binding material BM may be either a closed space or an open space. The receiving room 310 may be formed from a film, a molded body, or the like. When the receiving room 310 is formed from a film, the receiving container 300 may be formed to further include a molded body (housing) receiving a film which forms the receiving room 310. In addition, the receiving room 310 may also be formed from a relatively robust molded body.

The film or the molded body forming the receiving room 310 is formed from a high molecular weight material, a metal deposited film, or the like and may have a multilayer structure. When the receiving container 300 is formed from a plurality of components, such as films and/or molded bodies, a welded portion and/or an adhered portion may also be formed. In addition, for example, when the sheet manufacturing binding material BM to be received is deteriorated by contact with the air, the film and the molded body are each preferably formed from a material having a low gas permeability and each preferably has an air-tight mechanism, such as the container lid 304. Among the materials of the films and the molded bodies each forming the receiving room 310, a material of a portion in contact with the sheet manufacturing binding material BM to be received is preferably stable thereto.

The shape and the volume of the receiving room 310 are not particularly limited. Although the sheet manufacturing binding material BM is received in the receiving room 310, a solid and/or a gas inert to the sheet manufacturing binding material BM may also be received therewith. The volume of the sheet manufacturing binding material BM received in the receiving room 310 is also not particularly limited.

The receiving room 310 may have a distribution port which communicates between the inside of the receiving room 310 and the outside of the receiving container 300 and through which the sheet manufacturing binding material BM can be recovered out of the receiving container 300. In addition, in the receiving room 310, another flow path other then the distribution port described above may also be formed. The another flow path as described above may be formed, for example, using an open valve or the like. In the case in which an open valve is provided for the receiving room 310, the position at which the open valve is arranged is not particularly limited. However, when the receiving container 300 is placed in a normal posture for the transfer, the transport, and the use thereof, the open valve is preferably provided at a side opposite to that located in a direction in which the gravity acts. The reason for this is that if the difference in pressure is generated in the receiving room 310, the sheet manufacturing binding material BM is not likely to be discharged when the pressure is opened to the air.

According to the receiving container 300 of this embodiment, the storage and the transport of the sheet manufacturing binding material can be easily performed. 3. Sheet

A sheet of this embodiment includes the fibers described above and the sheet manufacturing binding material described above, and the fibers are bound to each other with the sheet manufacturing binding material. Accordingly, the rigidity of the sheet at a high temperature is excellent. Hereinafter, the rigidity of the sheet at a high temperature will be described.

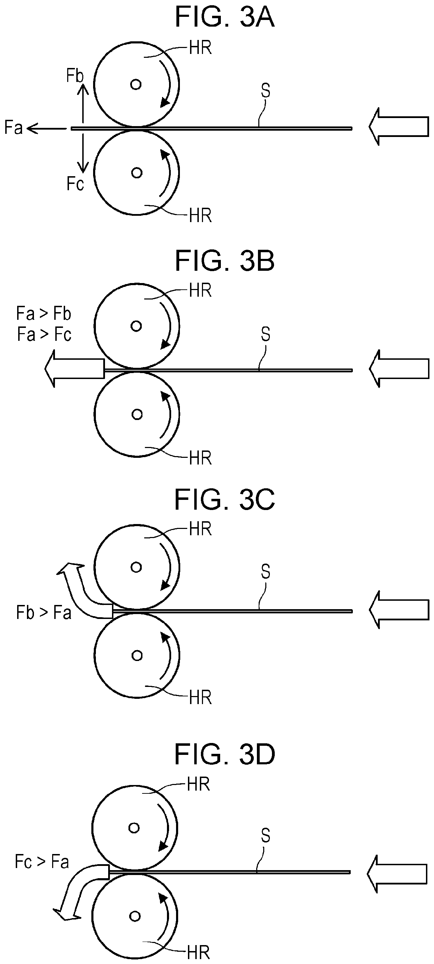

FIGS. 3A to 3D are each a schematic view illustrating the rigidity of the sheet at a high temperature. A sheet rigidity evaluation at a high temperature is performed by a sheet passing test which uses rotating heating rollers HR.

With reference to FIGS. 3A to 3D, a force Fb which winds a sheet around an upper heating roller HR and a force Fc which winds the sheet around a lower heating roller HR are applied on a sheet S which is to pass through between the heating rollers HR. When the sheet is to pass through between the heating rollers, a force Fa by which the sheet which is heated is advanced without winding around the roller is required to satisfy "Fa>Fb" and also "Fa>Fc". In the case described above, the sheet is able to pass through between the rollers without winding around the roller, and the case described above can be evaluated as "the rigidity of the sheet at a high temperature is high" (FIG. 3B).

On the other hand, when "Fb>Fa" or "Fc>Fa" is satisfied, the sheet winds around the upper or the lower roller (FIGS. 3C or 3D). In the case described above, it is judged that "the rigidity of the sheet at a high temperature is low".

Although the rigidity of the sheet at a high temperature is changed depending on, for example, the material, the surface temperature, and the rotation rate of the heating roller HR; and the shape of the sheet, in this specification, the following conditions are used.

A hollow core metal is covered with a silicone rubber and a tetrafluoroethylene-perfluoroalkyl vinyl ether copolymer (PFA resin) in this order and is then used as the heating roller HR. The heating roller HR is heated by a halogen heater provided at a hollow portion of the heating roller HR so that the surface temperature thereof is increased to 180°C. A manufactured sheet (sheet thickness: approximately 130 µm) is cut into a size of 150 mm×100 mm, and a cut sheet thus obtained is then charged to the heating rollers so as to pass therethrough for a nip time of one second.

The sheet contains the fibers described above and the sheet manufacturing binding material described above as the raw materials and primarily indicates a material having a sheet shape. However, the sheet is not limited to a material having a sheet shape, and for example, the sheet may have a board shape, a web shape, or a shape having irregularity. The sheet in this specification is classified into paper and a non-woven cloth. The paper has, for example, a sheet shape which is formed from pulp and/or waste paper used as a raw material and includes recording paper for writing and printing, wallpaper, wrapping paper, colored paper, drawing paper, Kent paper, and the like. The non-woven cloth is a sheet having a thickness larger than that of paper and/or a strength lower that that thereof, and includes, for example, a general non-woven cloth, a fiber board, tissue paper, kitchen paper, a cleaner, a filter, a liquid absorbing material, a sound absorbing material, a buffer material, or a mat.

### 4. Sheet Manufacturing Apparatus

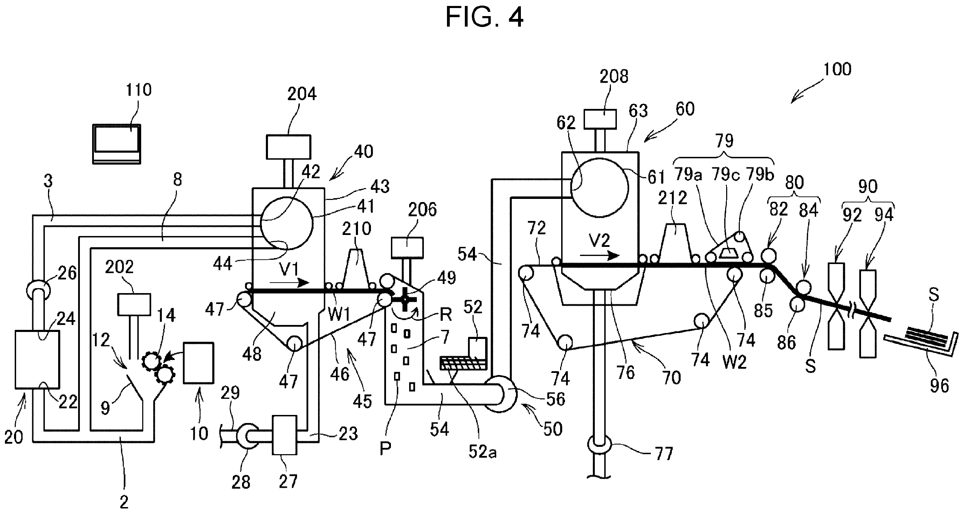

A sheet manufacturing apparatus of this embodiment includes a mixing portion in which the fibers described above and the sheet manufacturing binding material described above are mixed together and a sheet forming portion in which a sheet is formed by depositing a mixture mixed in the mixing portion, followed by heating. FIG. 4 is a schematic view showing the structure of the sheet manufacturing apparatus 100 of this embodiment.

The sheet manufacturing apparatus 100 described in this embodiment is, for example, an apparatus which manufactures new paper by defibrating used waste paper, such as confidential paper, as a raw material into fibers, followed by pressure application, heat application, and cutting. By various additives which are mixed with the raw material thus defibrated, in accordance with the application, a bond strength of a paper product and the degree of whiteness thereof may be improved, and/or functions, such as color, smell, and flame retardance, may also be obtained. In addition, since paper is formed while the density, the thickness, and the shape thereof are controlled, in accordance with the application, such as office paper having an A4 or A3 size or paper for name cards, paper having various thicknesses and sizes can be manufactured.

The sheet manufacturing apparatus 100 includes a supply portion 10, a coarsely pulverizing portion 12, defibrating portion 20, a sorting portion 40, a first web forming portion 45, a rotation body 49, the mixing portion 50, a deposition portion 60, a second web forming portion 70, a transport portion 79, a sheet forming portion 80, a cutting portion 90, and a control portion 110.

In addition, in order to humidify the raw material and/or a space in which the raw material is transferred, the sheet manufacturing apparatus 100 includes humidifying portions 202, 204, 206, 208, 210, and 212. A concrete structure of each of the humidifying portions 202, 204, 206, 208, 210, and 212 is arbitrarily formed, and for example, a steam type, a vaporization type, a hot-wind vaporization type, or an ultrasonic wave type may be mentioned.

In this embodiment, the humidifying portions 202, 204, 206, and 208 are each formed of a vaporization type or a hot-wind vaporization type humidifier. That is, the humidifying portions 202, 204, 206, and 208 each have a filter (not shown) to be infiltrated with water and each supply humidified water having an increased humidity by allowing air to pass through the filter. In addition, the humidifying portions 202, 204, 206, and 208 each may also include a heater (not shown) which effectively increases the humidity of the humidified air.

In addition, in this embodiment, the humidifying portions 210 and 212 are each formed of an ultrasonic wave humidifier. That is, the humidifying portions 210 and 212 each include a vibration portion (not shown) which atomizes water and each supply mist generated by the vibration portion.

The supply portion 10 supplies the raw material to the coarsely pulverizing portion 12. The raw material used to manufacture the sheet by the sheet manufacturing apparatus 100 may be any material as long as containing fibers, and for example, there may be mentioned paper, pulp, a pulp sheet, a cloth including a non-woven cloth, or a woven fabric. In this embodiment, the structure of the sheet manufacturing apparatus 100 in which waster paper is used as the raw material will be described by way of example. The supply portion 10 may have a structure including a stacker in which waste paper is stacked and stored and an automatic charge device feeding the waste paper from the stacker to the coarsely pulverizing portion 12.

The coarsely pulverizing portion 12 cuts (coarsely pulverizes) the raw material supplied by the supply portion 10 using coarsely pulverizing blades 14 into coarsely pulverized pieces. The coarsely pulverizing blade 14 cuts the raw material in a gas, such as the air (air). The coarsely pulverizing portion 12 includes a pair of the coarsely pulverizing blades 14 which sandwich and cut the raw material and a drive portion rotating the coarsely pulverizing blades 14 and can be formed to have a structure similar to that of a so-called shredder. The shape and the size of the coarsely pulverized pieces are arbitrary and may be appropriately determined so as to be suitable to a defibrating treatment in the defibrating portion 20. The coarsely pulverizing portion 12 cuts the raw material into pieces having a size of, for example, one to several centimeters square.

The coarsely pulverizing portion 12 includes a shoot (hopper) 9 receiving the coarsely pulverized pieces which fall down after being cut by the coarsely pulverizing blades 14. The shoot 9 has a tapered shape in which the width thereof is gradually decreased in a direction along which the coarsely pulverized pieces flow down (direction along which the coarsely pulverized pieces advance). Hence, the shoot 9 is able to receive many coarsely pulverized pieces. A tube 2 which communicates with the defibrating portion 20 is coupled to the shoot 9 to form a transport path through which the raw material (coarsely pulverized pieces) cut by the coarsely pulverizing blades 14 is transported to the defibrating portion 20. The coarsely pulverized pieces are collected by the shoot 9 and are transferred (transported) to the defibrating portion 20 through the tube 2. The coarsely pulverized pieces are transported by an air stream generated by, for example, a blower (not shown) toward the defibrating portion 20 through the tube 2.

To the shoot 9 of the coarsely pulverizing portion 12 or the vicinity thereof, humidified air is supplied by the humidifying portion 202. Accordingly, the coarsely pulverized pieces cut by the coarsely pulverizing blades 14 are suppressed from being adhered to inner surfaces of the shoot 9 and the tube 2 caused by static electricity. In addition, since the coarsely pulverized pieces cut by the coarsely pulverizing blades 14 are transferred to the defibrating portion 20 together with humidified (high humid) air, an effect of suppressing the adhesion of a defibrated material in the defibrating portion 20 can also be anticipated. In addition, the humidifying portion 202 may also be configured so as to supply humidified air to the coarsely pulverizing blades 14 and remove electricity of the raw material supplied by the supply portion 10. In addition, besides the humidifying portion 202, removal of electricity may also be performed using an ionizer.

The defibrating portion 20 defibrates the coarsely pulverized material cut in the coarsely pulverizing portion 12. In more particular, the raw material (coarsely pulverized pieces) cut by the coarsely pulverizing portion 12 is processed by the defibrating treatment to produce a defibrated material. In this case, the "defibrate" indicates that the raw material (material to be defibrated) formed of fibers bound to each other are loosened into separately independent fibers. The defibrating portion 20 also has a function to separate substances, such as resin particles, an ink, a toner, and a blurring inhibitor, each of which is adhered to the raw material, from the fibers.

A material passing through the defibrating portion 20 is called a "defibrated material". In the "defibrated material", besides the fibers thus defibrated, resin (resin functioning to bind fibers to each other) particles; coloring materials, such as an ink and a toner; and additives, such as a blurring inhibitor and a paper reinforcing agent, which are separated from the fibers when the fibers are defibrated, may also be contained in some cases. The material thus defibrated has a string shape or a ribbon shape. The material thus defibrated may be present in a state (independent state) so as not to be entangled with other defibrated materials or may be present in a state (state in which so-called "damas" are formed) so as to be entangled therewith to form lumps.

The defibrating portion 20 performs dry defibration. In this case, a treatment, such as defibration, which is performed not in a liquid but in a gas, such as in the air (air), is called a dry type. In this embodiment, the defibrating portion 20 is configured to use an impellor mill. In particular, the defibrating portion 20 includes a high rotating rotor (not shown) and a liner (not shown) disposed around the outer circumference of the rotor. The coarsely pulverized pieces cut by the coarsely pulverizing portion 12 are sandwiched between the rotor and the liner of the defibrating portion 20 and are then defibrated thereby. The defibrating portion 20 generates an air stream by the rotation of the rotor. By this air stream, the defibrating portion 20 sucks the coarsely pulverized pieces functioning as the raw material through the tube 2, and the defibrated material can be transported to a discharge port 24. The defibrated material is fed to a tube 3 from the discharge port 24 and then transferred to the sorting portion 40 through the tube 3.

As described above, the defibrated material produced in the defibrating portion 20 is transported to the sorting portion 40 from the defibrating portion 20 by the air stream generated thereby. Furthermore, in this embodiment, the sheet manufacturing apparatus 100 includes a defibrating portion blower 26 functioning as an air stream generator, and by an air stream generated by the defibrating portion blower 26, the defibrated material is transported to the sorting portion 40. The defibrating portion blower 26 is provided for the tube 3, and air is sucked together with the defibrated material from the defibrating portion 20 and then sent to the sorting portion 40.

The sorting portion 40 includes an inlet port 42 into which the defibrated material defibrated in the defibrating portion 20 flows together with the air stream through the tube 3. The sorting portion 40 sorts the defibrated material introduced into the inlet port 42 by the length of the fibers. In particular, the sorting portion 40 sorts the defibrated material defibrated in the defibrating portion 20 into a defibrated material having a predetermined size or less as a first sorted material and a defibrated material larger than the first sorted material as a second sorted material. The first sorted material includes fibers, particles, and the like, and the second sorted material includes, for example, large fibers, non-defibrated pieces (coarsely pulverizing pieces which are not sufficiently defibrated), and damas which are formed since defibrated fibers are aggregated or entangled with each other.

In this embodiment, the sorting portion 40 includes a drum portion (sieve portion) 41 and a housing portion (cover portion) 43 receiving the drum portion 41.

The drum portion 41 is a cylindrical sieve which is rotatably driven by a motor. The drum portion 41 has a net (filter or screen) and functions as a sieve. By the meshes of this net, the drum 41 sorts the first sorted material smaller than the sieve opening (aperture) of the net and the second sorted material larger than the sieve opening of the net. As the net of the drum portion 41, for example, there may be used a metal net, an expanded metal formed by expanding a metal plate provided with cut lines, or a punched metal in which holes are formed in a metal plate by a press machine or the like.

The defibrated material introduced into the inlet port 42 is fed together with the air stream to the inside of the drum portion 41, and by the rotation of the drum portion 41, the first sorted material is allowed to fall down through the meshes of the net of the drum portion 41. The second sorted material is guided to a discharge port 44 by the air stream flowing into the drum portion 41 from the inlet port 42 and is then fed to a tube 8.

The tube 8 communicates between the inside of the drum portion 41 and the tube 2. The second sorted material which flows through the tube 8 flows together with the coarsely pulverized pieces cut by the coarsely pulverizing portion 12 in the tube 2 and is then guided to an inlet port 22. Accordingly, the second sorted material is returned to the defibrating portion 20 and is then subjected to the defibrating treatment.

In addition, the first sorted material sorted by the drum portion 41 is dispersed in air through the meshes of the net of the drum portion 41 and is then allowed to fall down to a mesh belt 46 of the first web forming portion 45 located under the drum portion 41.

The first web forming portion 45 (separation portion) includes the mesh belt 46 (separation belt), rollers 47, and a suction portion (suction mechanism) 48. The mesh belt 46 is an endless belt, is suspended by the three rollers 47, and by the movement of the rollers 47, is transported in a direction shown by an arrow in the figure. The surface of the mesh belt 46 is formed of a net in which openings having a predetermined size are arranged. Of the first sorted material which is allowed to fall down from the sorting portion 40, fine particles passing through the meshes of the net fall down to a lower side of the mesh belt 46, fibers having a size which are not allowed to fall down through the meshes of the net are deposited on the mesh belt 46 and are transported therewith in the arrow direction. The fine particles which fall down through the mesh belt 46 include particles (such as resin particles, coloring material, and additives) having relatively small size and/or low density in the defibrated material, and the fine particles are unnecessary materials which will not be used for manufacturing of the sheet S by the sheet manufacturing apparatus 100.

The mesh belt 46 is transferred at a predetermined velocity V1 during a normal operation for manufacturing of the sheet S. In the case described above, "during the normal operation" indicates during the operation other than that performing a start control and a stop control of the sheet manufacturing apparatus 100 and, in more particular, indicates during manufacturing of a sheet S having a preferable quality by the sheet manufacturing apparatus 100.

Accordingly, the defibrated material processed by the defibrating treatment in the defibrating portion 20 is sorted into the first sorted material and the second sorted material in the sorting portion 40, and the second sorted material is returned to the defibrating portion 20. In addition, from the first sorted material, the unnecessary materials are removed by the first web forming portion 45. The residues obtained after the unnecessary materials are removed from the first sorted material are a material suitable for manufacturing of the sheet S, and this material is deposited on the mesh belt 46 to form a first web W1.

The suction portion 48 sucks air under the mesh belt 46. The suction portion 48 is coupled to a dust collection portion 27 through a tube 23. The dust collection portion 27 is a filter-type or a cyclone-type dust collection device and separates fine particles from the air stream. A collection blower 28 is provided at a downstream side of the dust collection portion 27 and functions as a dust suction portion which sucks air from the dust collection portion 27. In addition, air discharged from the collection blower 28 is discharged outside of the sheet manufacturing apparatus 100 through a tube 29.

According to the structure described above, by the collection blower 28, air is sucked from the suction portion 48 through the dust collection portion 27. In the suction portion 48, fine particles passing through the meshes of the net of the mesh belt 46 are sucked together with air and are then fed to the dust collection portion 27 through the tube 23. In the dust collection portion 27, the fine particles passing through the mesh belt 46 are separated from the air stream and then accumulated.

Hence, fibers obtained after the unnecessary materials are removed from the first sorted material are deposited on the mesh belt 46, and hence, the first web W1 is formed. Since the suction is performed by the collection blower 28, the formation of the first web W1 on the mesh belt 46 is promoted, and in addition, the unnecessary materials can be rapidly removed.

To a space including the drum portion 41, humidified air is supplied by the humidifying portion 204. By this humidified air, the first sorted material is humidified in the sorting portion 40. Accordingly, the adhesion of the first sorted material to the mesh belt 46 caused by static electricity is suppressed, so that the first sorted material is likely to be peeled away from the mesh belt 46. Furthermore, the adhesion of the first sorted material to the rotation body 49 and the inner wall of the housing portion 43 caused by static electricity can be suppressed. In addition, by the suction portion 48, the unnecessary materials can be efficiently sucked.

In addition, in the sheet manufacturing apparatus 100, the structure in which the first sorted material and the second sorted material are sorted and separated is not limited to the sorting portion 40 including the drum portion 41. For example, the structure in which the defibrated material obtained by the defibrating treatment in the defibrating portion 20 is classified by a classifier may also be used. As the classifier, for example, a cyclone classifier, an elbow-jet classifier, or an eddy classifier may be used. When those classifiers are used, the first sorted material and the second sorted material can be sorted and separated. Furthermore, by the classifiers described above, the structure in which the unnecessary materials (such as resin particles, coloring material, and additives) having relatively small size and low density are separated and removed from the defibrated material can be realized. For example, the structure in which fine particles contained in the first sorted material are removed therefrom by a classifier may also be formed. In this case, the structure in which the second sorted material is returned, for example, to the defibrating portion 20, the unnecessary materials are collected by the dust collection portion 27, and the first sorted material other than the unnecessary materials is fed to a tube 54 may be formed.

In a transport path of the mesh belt 46, at a downstream side of the sorting portion 40, air containing mist is supplied by the humidifying portion 210. The mist which is fine particles of water generated by the humidifying portion 210 falls down to the first web W1 and supplies moisture thereto. Accordingly, the moisture amount contained in the first web W1 is adjusted, and hence, for example, the adsorption of the fibers to the mesh belt 46 caused by static electricity can be suppressed.

The sheet manufacturing apparatus 100 includes the rotation body 49 which divides the first web W1 deposited on the mesh belt 46. The first web W1 is peeled away from the mesh belt 46 at a position at which the mesh belt 46 is folded by the roller 47 and is then divided by the rotation body 49.

The first web W1 is a soft material having a web shape formed by deposition of the fibers, the rotation body 49 disentangles the fibers of the first web W1, and hence, the first web W1 is likely to be mixed with the sheet manufacturing binding material in the mixing portion 50 which will be described later.

Although the structure of the rotation body 49 is arbitrarily formed, in this embodiment, the rotation body 49 has a rotating blade shape having at least one rotatable plate-shaped blade. The rotation body 49 is disposed at a position at which the first web W1 peeled away from the mesh belt 46 is brought into contact with the blade. By the rotation (such as rotation in a direction indicated by an arrow R in the figure), the first web W1 peeled away from and transported by the mesh belt 46 collides with the blade and is divided thereby, so that small parts P are produced.

In addition, the rotation body 49 is preferably placed at a position at which the blade of the rotation body 49 does not collide with the mesh belt 46. For example, the distance between a front end of the blade of the rotation body 49 and the mesh belt 46 can be set to 0.05 to 0.5 mm, and in this case, without causing damage on the mesh belt 46 by the rotation body 49, the first web W1 can be efficiently divided.

The small parts P divided by the rotation body 49 fall down in a tube 7 and are then transferred (transported) to the mixing portion 50 by an air stream flowing inside the tube 7.

In addition, to a space including the rotation body 49, humidified air is supplied by the humidifying portion 206. Accordingly, a phenomenon in which the fibers are adhered by static electricity to the inside of the tube 7 and the blade of the rotation body 49 can be suppressed. In addition, since air having a high humidity is supplied to the mixing portion 50 through the tube 7, influence caused by static electricity on the mixing portion 50 can be suppressed.

The mixing portion 50 includes an additive supply portion 52 which supplies additives including the sheet manufacturing binding material, the tube 54 which communicates with the tube 7 and through which an air stream containing the small parts P flows, and a mixing blower 56.

The small parts P are fibers obtained by removing the unnecessary materials from the first sorted material passing through the sorting portion 40 as described above. The mixing portion 50 mixes the additives including the sheet manufacturing binding material with the fibers which form the small parts P.

In the mixing portion 50, an air stream is generated by the mixing blower 56, and the small parts P and the additives are transported in the tube 54 while being mixed together. In addition, the small parts P are disentangled in a process in which the small parts P flow inside the tube 7 and the tube 54, so that finer fibrous parts are formed.

The additive supply portion 52 (resin receiving portion) is coupled to an additive cartridge (not shown) in which the additives are stored, and the additives in the additive cartridge is supplied to the tube 54. The additive cartridge may have a structure detachable to the additive supply portion 52. In addition, the structure in which the additives are replenished to the additive cartridge may also be provided. The additive supply portion 52 temporarily stores the additives in the form of fine powders or fine particles in the additive cartridge. The additive supply portion 52 includes a discharge portion 52a (additive supply portion) which supplies the temporarily stored additives to the tube 54. In addition, the addition cartridge may be the receiving container 300 described above.

The discharge portion 52a includes a feeder (reference numeral thereof is omitted) which feeds the additives stored in the additive supply portion 52 to the tube 54 and a shutter (not shown) which opens and closes a path communicating between the feeder and the tube 54. When this shutter is closed, a path or an opening communicating between the discharge portion 52a and the tube 54 is closed, so that the supply of the additives from the additive supply portion 52 to the tube 54 is stopped.

In the state in which the feeder of the discharge portion 52a does not work, although the additives are not supplied from the discharge portion 52a to the tube 54, for example, when a reduced pressure is generated in the tube 54, even if the feeder of the discharge portion 52a is stopped, the additives may flow into the tube 54 in some cases. When the discharge portion 52a is closed, the flow of the additives as described above can be reliably stopped.

The additives supplied by the additive supply portion 52 include the sheet manufacturing binding material of this embodiment which is used to bind fibers. The additives may further include at least one additive other than the sheet manufacturing binding material.

The sheet manufacturing binding material included in the additives is melted by heating so as to bind fibers to each other. Hence, in the state in which the sheet manufacturing binding material and the fibers are mixed together, when the sheet manufacturing binding material is not heated to a temperature at which melting thereof occurs, the fibers are not bound to each other.

In addition, besides the sheet manufacturing binding material which binds the fibers, for example, the additives supplied by the additive supply portion 52 may also include, in accordance with the type of sheet to be manufactured, a coloring material which colors the fibers, an aggregation suppressor which suppresses aggregation of the fibers and aggregation of the sheet manufacturing binding material, and/or a flame retardant agent which enables the fibers to be unlikely to be combusted. In addition, additives including no coloring material may have a colorless color, a pale color which is almost regarded as a colorless color, or a white color.

By the air stream generated by the mixing blower 56, the small parts P falling down in the tube 7 and the additives supplied by the additive supply portion 52 are sucked in the tube 54 and are allowed to pass inside the mixing blower 56. By the air stream generated by the mixing blower 56 and/or the function of a rotation portion, such as a blade, of the mixing blower 56, the fibers forming the small parts P and the additives are mixed together, and the mixture thus formed (mixture of the first sorted material and the additives) are transferred to the deposition portion 60 through the tube 54.

In addition, a mechanism in which the first sorted material and the additives are mixed together is not particularly limited and may be stirring which is performed by a blade rotatable at a high rate. In addition, rotation of a container, such as a V type mixer, may also be used, and those mechanisms each may be disposed at a front side or a rear side of the mixing blower 56.

The deposition portion 60 deposits the defibrated material defibrated in the defibrating portion 20. In more particular, the deposition portion 60 introduces the mixture passing through the mixing portion 50 through an inlet port 62 and disentangles the defibrated material (fibers) thus entangled, so that the defibrated material is allowed to fall down while being dispersed in air. Accordingly, the deposition portion 60 can uniformly deposit the mixture in the second web forming portion 70.

The deposition portion 60 includes a drum portion 61 and a housing portion (cover portion) 63 receiving the drum portion 61. The drum portion 61 is a rotatably driven cylindrical sieve. The drum portion 61 has a net (filter or screen) and functions as a sieve. By the meshes of this net, the drum portion 61 allows fibers and particles, each of which is smaller than the mesh (opening) of this net, to pass through and fall down from the drum portion 61. For example, the structure of the drum portion 61 is the same as that of the drum portion 41.

In addition, the "sieve" of the drum portion 61 may not have a function to sort a specific object. That is, the "sieve" to be used as the drum portion 61 indicates a member provided with a net, and the drum portion 61 may allows all of the mixture introduced thereinto to fall down.

Under the drum portion 61, the second web forming portion 70 is disposed. The second web forming portion 70 deposits a material passing through the deposition portion 60 to form a second web W2. The second web forming portion 70 includes, for example, a mesh belt 72, rollers 74, and a suction mechanism 76.

The mesh belt 72 is an endless belt, is suspended by the rollers 74, and by the movement of the rollers 74, is transported in a direction shown by an arrow in the FIG. 4. The mesh belt 72 is formed, for example, of a metal, a resin, a cloth, or a non-woven cloth. The surface of the mesh belt 72 is formed of a net in which openings having a predetermined size are arranged. Of the fibers and particles which are allowed to fall down from the drum portion 61, fine particles passing through the meshes of the net fall down to a lower side of the mesh belt 72, fibers having a size not allowed to fall down through the meshes of the net are deposited on the mesh belt 72 and are transported therewith in the arrow direction. The mesh belt 72 is transferred at a predetermined velocity V2 during a normal operation for manufacturing of the sheet S. The "during the normal operation" indicates the same as described above.

The meshes of the net of the mesh belt 72 are fine and may be set so that most of the fibers and particles falling down from the drum portion 61 are not allowed to pass therethrough.

The suction mechanism 76 is provided at a lower side (opposite to the side of the deposition portion 60) of the mesh belt 72. The suction mechanism 76 includes a suction blower 77, and by a suction force of the suction blower 77, an air stream (air stream toward the mesh belt 72 from the deposition portion 60) toward a lower side can be generated in the suction mechanism 76.

By the suction mechanism 76, a mixture dispersed in air by the deposition portion 60 is sucked on the mesh belt 72. Accordingly, the formation of the second web W2 on the mesh belt 72 is promoted, and hence, a discharge rate from the deposition portion 60 can be increased. Furthermore, by the suction mechanism 76, a downflow can be formed in a falling path of the mixture, and hence, the defibrated material can be prevented from being entangled with each other during the falling.

The suction blower 77 (deposition suction portion) may discharge air sucked from the suction mechanism 76 outside of the sheet manufacturing apparatus 100 through a collection filter (not shown). Alternatively, air sucked by the suction blower 77 may be fed to the dust collection portion 27 so that unnecessary materials contained in the air sucked by the suction mechanism 76 may be collected.

To a space including the drum portion 61, humidified air is supplied by the humidifying portion 208. By this humidified air, the inside of the deposition portion 60 can be humidified, and the adhesion of fibers and particles to the housing portion 63 caused by static electricity is suppressed, so that the fibers and particles are allowed to rapidly fall down on the mesh belt 72, and the second web W2 can be formed to have a preferable shape.

As described above, through the deposition portion 60 and the second web forming portion 70 (web forming step), the second web W2 can be formed so as to be softly expanded with a large amount of air incorporated therein. The second web W2 deposited on the mesh belt 72 is transported to the sheet forming portion 80.

In a transport path of the mesh belt 72, at a downstream side of the deposition portion 60, by the humidifying portion 212, air containing mist is supplied. Accordingly, the mist generated by the humidifying portion 212 is supplied to the second web W2, so that the content of moisture contained in the second web W2 is adjusted. Accordingly, for example, the adsorption of fibers to the mesh belt 72 caused by static electricity can be suppressed.

The sheet manufacturing apparatus 100 includes the transportation portion 79 which transports the second web W2 on the mesh belt 72 to the sheet forming portion 80. The transport portion 79 includes, for example, a mesh belt 79a, rollers 79b, and a suction mechanism 79c.

The suction mechanism 79c includes a blower (not shown), and by a suction force of the blower, an upward air stream is generated to the mesh belt 79a. This air stream sucks the second web W2, and the second web W2 is separated from the mesh belt 72 and then adsorbed to the mesh belt 79a. The mesh belt 79a is transferred by the rotations of the rollers 79b, so that the second web W2 is transported to the sheet forming portion 80. The transfer rate of the mesh belt 72 is the same, for example, as the transfer rate of the mesh belt 79a.

As described above, the transport portion 79 peels away the second web W2 formed on the mesh belt 72 therefrom and then transports the second web W2 thus peeled away.

The sheet forming portion 80 forms the sheet S from a deposit deposited in the deposition portion 60. In more particular, the sheet forming portion 80 forms the sheet S by heating and pressuring the second web W2 (deposit) which is deposited on the mesh belt 72 and is then transported by the transport portion 79. The sheet forming portion 80 binds a plurality of fibers in the mixture to each other with the additive (sheet manufacturing binding material) interposed therebetween by heating the fibers of the defibrated material and the additive contained in the second web W2.

The sheet forming portion 80 includes a pressure application portion 82 which pressurizes the second web W2 and a heating portion 84 which heats the second web W2 pressurized by the pressure application portion 82.

The pressure application portion 82 is formed of a pair of calendar rollers 85 which sandwich the second web W2 at a predetermined nip pressure for pressure application. Since the second web W2 is pressurized, the thickness thereof is decreased, and hence, the density of the second web W2 is increased. One of the pair of calendar rolls is a drive roller driven by a motor (not shown), and the other roller is a driven roller. The calendar rollers 85 are rotated by a driving force of the motor, and the second web W2, the density of which is increased by the pressure application, is transported toward the heating portion 84.

The heating portion 84 may be formed, for example, using heating rollers (heater rollers), a heat press forming machine, a hot plate, a hot-wind blower, an infrared heater, or a flash fixing device. In this embodiment, the heating portion 84 includes a pair of heating rollers 86. The heating rollers 86 are heated to a predetermined temperature by a heater disposed inside or outside. The heating rollers 86 sandwich the second web W2 pressurized by the calendar rollers 85 for heat application, so that the sheet S is formed.

One of the pair of heating rollers 86 is a drive roller driven by a motor (not shown), and the other roller is a driven roller. The heating rollers 86 are rotated by a driving force of the motor, so that the sheet S thus heated is transported toward the cutting portion 90.

As described above, the second web W2 formed in the deposition portion 60 is pressurized and heated in the sheet forming portion 80, so that the sheet S is formed.

In addition, the number of the calendar rollers 85 of the pressure application portion 82 and the number of the heating rollers 86 of the heating portion 84 are not particularly limited.

The cutting portion 90 cuts the sheet S formed in the sheet forming portion 80. In this embodiment, the cutting portion 90 includes a first cutting portion 92 which cuts the sheet S in a direction intersecting a transport direction of the sheet S and a second cutting portion 94 which cuts the sheet S in a direction parallel to the transport direction. The second cutting portion 94 cuts the sheet S which passes through the first cutting portion 92.

As described above, a single sheet S having a predetermined size is formed. The single sheet S thus cut is discharged to a discharge portion 96. The discharge portion 96 includes a tray or a stacker on each of which sheets S each having a predetermined size are placed.

In the structure described above, the humidifying portions 202, 204, 206, and 208 may be formed from one vaporization type humidifier. In this case, the structure may be formed so that humidified air generated by one humidifier is branched and supplied to the coarsely pulverizing portion 12, the housing portion 43, the tube 7, and the housing portion 63. When a duct (not shown) which supplies humidified air is branched and then installed, the structure described above can be easily realized. In addition, of course, the humidifying portions 202, 204, 206, and 208 may also be formed from two or three vaporization type humidifiers.

In addition, in the structure described above, the humidifying portions 210 and 212 may be formed from one ultrasonic wave humidifier or may be formed from two ultrasonic wave humidifiers. For example, air containing mist generated by one humidifier may be configured to be branched and supplied to the humidifying portions 210 and 212.

In addition, in the structure described above, although the coarsely pulverizing portion 12 first pulverizes the raw material, and the sheet S is manufactured from the pulverized raw material, for example, the structure may also be formed so that fibers are used as the raw material, and the sheet S is manufactured therefrom.

For example, the structure may also be formed so that as the raw material, fibers equivalent to the defibrated material obtained by the defibrating treatment performed in the defibrating portion 20 are charged in the drum portion 41. In addition, the structure may also be formed so that as the raw material, fibers equivalent to the first sorted material separated from the defibrated material is charged to the tube 54. In the case described above, when fibers obtained by processing of waste paper, pulp, and the like is supplied to the sheet manufacturing apparatus 100, the sheet S can be manufactured.

According to the sheet manufacturing apparatus 100 of this embodiment, since the sheet manufacturing binding material of this embodiment is used, a sheet having an excellent rigidity at a high temperature can be formed. According to the sheet manufacturing apparatus 100 of this embodiment, since dry-type sheet manufacturing can be performed, compared to wet-type sheet manufacturing, waste water treatment is not required, and as a result, sheet manufacturing having a low environmental load can be realized.

### 5. Examples

Hereinafter, although the embodiments of the present disclosure will be described in more detail with reference to the following Examples, the embodiments are not limited thereto. Hereinafter, "part(s)" and "%" are each represented based on mass unless otherwise particularly noted.

### 5.1. Manufacturing of Sheet Manufacturing Binding Material

### 5.1.1 Synthesis of Polyesters of Examples 1 To 5

As shown in Examples 1 to 5 of Table 1, after a polyvalent alcohol and a polybasic acid were charged at a molar ratio shown in Table 1 in a 5-L four-neck stainless steel flask equipped with a stirrer, a nitrogen gas inlet, and a thermometer and were then melted at 120°C by heating, titanium tetraisopropoxide was added. After the temperature was increased to 240°C in a nitrogen stream, and a reaction was performed for 3 hours, a reaction was further performed at 220°C and 5 kPa for 3 hours. After a polyester resin thus obtained was cooled to room temperature for solidification, the polyester resin thus solidified was coarsely pulverized by a Rotoplex pulverizer.

**Table 1**

| Table 1: | | EXAMPLE 1 | EXAMPLE 2 | EXAMPLE 3 | EXAMPLE 4 | EXAMPLE 5 |
|---|---|---|---|---|---|---|
| POLYVALENT ALCOHOL | ETHYLENE GLYCOL | - | - | - | - | 25.5 |
| | 1,2-PROPYLENE GLYCOL | 50.5 | 50.9 | 50.2 | 51.8 | 25.5 |
| POLYBASIC ACID | TEREPHTHALIC ACID | 49.5 | 47.2 | 47.9 | 43.7 | 47.2 |
| | TRIMELLITIC ANHYDRIDE | - | 1.9 | 1.9 | 4.5 | 1.8 |

### 5.1.2. Size Adjustment of Polyester Particles

In each Example, the coarsely pulverized polyester was pulverized into particles having a diameter of 1 mm or less by a hammer mill ("Labomill LM-5", manufactured by Dalton Co., Ltd.). Furthermore, the pulverized particles were pulverized by a jet mill ("PJM-80SP", manufactured by Nippon Pneumatic Mfg. Co., Ltd.), so that particles having a maximum particle diameter of 40 µm or less were obtained. This particles were classified by an air stream classifier ("MDS-3", manufactured by Nippon Pneumatic Mfg. Co., Ltd.), so that particles having a volume average particle diameter of 10 µm were obtained.

### 5.1.3. Coating of Aggregation Suppressor on Polyester Particles

Next, 100 parts by weight of non-coated polyester particles of each Example and 1 part by weight of fumed silica ("AEROSIL R972", manufactured by Nippon Aerosil Co., Ltd.) used as an aggregation suppressor were charged in a Waring blender ("7012S", manufactured by Waring Products Corp.) and were then mixed together at a revolution rate of 15,600 rpm for 60 seconds. As a result, a sheet manufacturing binding material of each Example was obtained. Hence, the sheet manufacturing binding material of each of Examples 1 to 5 contained particles which integrally included the polyester and the aggregation suppressor.

When some of the polyester particles thus treated were received in a glass container and were then left at room temperature for 24 hors, blocking caused by aggregation of the particles was not recognized, and a fluid powder state was maintained. Accordingly, it was confirmed that since the aggregation suppressor was coated, a non-aggregation state was maintained.

### 5.2. Manufacturing of Sheet

As fibers forming a sheet, a powdered cellulose ("KC Flock W50-S", manufactured by Nippon Paper Industries Co., Ltd.) was used. Subsequently, 20 parts by weight of the fibers described above and 5 parts by weight of the sheet manufacturing binding material of each of Examples 1 to 5 obtained as described above were charged in a Waring blender ("7012S", manufactured by Warling Products Corp.) and were then mixed at a revolution rate of 3,100 rpm for 7 seconds, so that a mixture of the fibers and the sheet manufacturing binding material was obtained.

Next, 40 parts by weight of the mixture thus obtained was charged to a sieve having an opening of 0.6 mm and a diameter of 200 mm and was then deposited on a fluorine-resin coated aluminum disc ("Sumiflon Coated Aluminum", manufactured by Sumitomo Electric Fine Polymer, Inc.) having a diameter of 250 mm (plate thickness: 1 mm) using an electric vibrator ("AS-200", manufactured by Retsch). On a mixture thus deposited, a fluorine resin-coated aluminum plate having the sane diameter as that described above was placed, and the mixture was pressurized by a press machine so that the pressure applied on the sheet was 1 MPa.

As a method to heat the pressurized mixture, two methods were used. As one method, the mixture sandwiched between aluminum plates was set in a heat press and then heated at 150°C for 15 seconds. After the pressure was released, the mixture was left at room temperature until cooled to room temperature. Subsequently, the mixture was peeled away from the aluminum plates, so that the sheet was obtained. This heat press method enables the sheet manufacturing binding material to be sufficiently impregnated between the cellulose fibers. Hence, the sheet thus formed exhibits inherent tensile strength and rigidity.

As another heating method, a pressurized mixture was allowed to pass through heating rollers for heating. When the mixture passed through the rollers, a surface temperature of the roller was set to 180°C, and a nip time was set to one second. This heating roller method is a heating method suitably used when the sheet is continuously processed at a high speed. The thickness of the sheet obtained by each of the heating methods described above was approximately 130 µm.

### 5.3. Example 6

A sheet manufacturing binding material of Example 6 was obtained as described below.

A polyester was synthesized in a manner similar to that in the above Example 4. Next, 1,700 parts of the polyester thus synthesized and 300 parts of a blue copper phthalocyanine pigment ("LIONEL BLUE FG-7330", manufactured by Toyocolor Co., Ltd.) were processed by a high speed mixer ("FM type Mixer FM-10C", manufactured by Nippon Coke & Engineering Co., Ltd.), so that a mixture of the polyester and the pigment was obtained. This mixture was supplied to a hopper of a twin-screw kneading extruder ("TEM-26SS, manufactured by Toshiba Machine Co., Ltd.) to perform melt kneading, followed by palletizing, so that pellets having a size of approximately 3 mm were obtained.

In addition, in a manner similar to that of each of the above Examples 1 to 5, the size adjustment and the coating of the aggregation suppressor were performed on the pellets, so that the sheet manufacturing binding material of Example 6 was obtained. The sheet manufacturing binding material of Example 6 contained particles which integrally included the polyester, the coloring material, and the aggregation suppressor.

A sheet of Example 6 was formed in a manner similar to that of each of Examples 1 to 5 using the sheet manufacturing binding material of Example 6.

### 5.4. Comparative Example 1

In Comparative Example 1, the synthesis of the polyester of the present disclosure was not performed, and a polyester resin ("VYLON 220" (Tg=54°C), manufactured by Toyobo Co., Ltd.) having a Tg lower than 65.0°C was used. In addition, in a manner similar to that of each of Examples 1 to 5, the size adjustment and the coating of the aggregation suppressor on the particles were performed, so that a sheet manufacturing binding material of Comparative Example 1 was obtained. A sheet of Comparative Example 1 was formed in a manner similar to that of each of Examples 1 to 5 using the sheet manufacturing binding material of Comparative Example 1.

### 5.5. Synthesis of Polyesters of Comparative Examples 2 to 5

In Table 2, raw materials of polyesters synthesized as Comparative Examples 2 to 5 and molar ratios thereof are shown. The synthesis method was performed in a manner similar to that of Example 1.

**Table 2**

| Table 2: | | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|
| POLYVALENT ALCOHOL | ETHYLENE GLYCOL | 24.0 | 21.0 | 14.0 | 30.0 |
| | 1,4-BUTANE DIOL | 29.0 | 25.0 | 28.0 | 20.0 |
| | PENTAERYTHRITOL | - | 2.0 | 4.0 | - |
| POLYBASIC ACID | TEREPHTHALIC ACID | 26.0 | 27.0 | 31.0 | 27.0 |
| | TRIMELLITIC ANHYDRIDE | 7.0 | 9.0 | 6.0 | 1.0 |
| | ISOPHTHALIC ACID | 14.0 | 16.0 | 17.0 | 22.0 |

In Comparative Examples 2 to 5, the size adjustment and the coating of the aggregation suppressor were performed on the particles in a manner similar to that of Example 1, so that sheet manufacturing binding materials of Comparative Examples 2 to 5 were obtained. In addition, except for that the sheet manufacturing binding materials described above were used, sheets of Comparative Examples 2 to 5 were obtained in a manner similar to that of Example 1.

### 5.6. Evaluation Items

### 5.6.1 Measurement of Glass Transition Temperature (Tg)

The measurement was performed using a differential scanning calorimeter ("DSC-220C", manufactured by Seiko Instruments Inc.). On an aluminum pan, 10 mg of the sheet manufacturing binding material of each of Examples and Comparative Example was measured, and as a reference sample, 10 mg of an Al₂O₃ powder was measured. After the sample and the reference sample were set in the DSC, the temperature was increased to 150°C at a temperature increase rate of 10°C/min, was then decreased to 0°C at a temperature decrease rate of 10°C/min, and was maintained for 10 minutes. From a line extended from a base line at a lower temperature side of a DSC curve which was obtained when the temperature was again increased to 150°C at a temperature increase rate of 10°C/min and a tangent line drawn at a point of the curve of a stepwise change portion at which the slope is maximized, an intersection point was obtained and was regarded as the glass transition temperature (Tg). The results thereof are shown in Tables 3 and 4.

### 5.6.2. Measurement of Softening Temperature

For the measurement of the softening temperature, a flow tester ("CFT-500D", manufactured by Shimadzu Corporation) was used. While 1.1 g of the sheet manufacturing binding material of each of Examples or Comparative Examples was heated at a temperature increase rate of 5°C/min, a load of 20 kg was applied, so that the sheet manufacturing binding material was extruded from a nozzle having a diameter of 1 mm and a length of 1 mm. A stroke was plotted with the temperature, and a temperature at which a half of the sample flowed out was regarded as the softening temperature. The results are shown in Tables 3 and 4.

### 5.6.3. Calculation of Pulverization Index

The polyester synthesized in each Example in the form of lumps before the size adjustment was pulverized by a hammer mill into blocks having a size of approximately 5 mm. The polyester thus pulverized was charged to a feather mill ("FM-1S", manufactured by Hosokawa Micron Corporation) equipped with standard hammers and a screen having a pore diameter of 10 mm, and a pulverization treatment was performed at a revolution rate of 900 rpm, so that particles, all of which passed through an 8-mesh screen (opening: 2.36 mm), were obtained. The particles were charged in a Warling blender ("7012S", manufactured by Warling Products Corp.) equipped with a stainless steel container and a cutter and were treated at a revolution rate of 13,000 rpm for 60 seconds. After the material thus treated was sieved using a 12-mesh screen (opening: 1.4 mm), a material which passed through the sieve was charged in a high-speed mill ("HS-10", manufactured by Scenion Inc.), and a cycle in which a pulverization treatment was performed at a revolution rate of 30,000 rpm for 30 seconds and was then stopped for 180 seconds was repeatedly performed three times. A weight M (g) after the treatment described above was measured and then charged on a 32-mesh sieve (sieve diameter: 200 mm) equipped with an electromagnetic sieve vibrator ("AS200", manufactured by Retsch), and sieve classification was performed at a magnitude of 2 mm for 20 minutes. A weight R (g) of a resin remaining on the 32-mesh sieve (opening: 500 µm) was measured, and a pulverization index D=(M-R)/M was calculated. The results are shown in Tables 3 and 4.

### 5.6.4. Evaluation of Powder Processability

A powder processability of the polyester synthesized in each Example was evaluated in such a way that after the polyester in the form of lumps before the size adjustment was pulverized by a pulverization treatment using a jet mil, when a number-based cumulative frequency of particle diameter of 5 µm or less was 20% or less, the evaluation thereof was "A", and when the number-based cumulative frequency described above was more than 20%, the evaluation thereof was "B". The measurement of the particle diameter in this evaluation was performed using a wet-type flow-type particle diameter and shape analyzer ("FPIA-2000", manufactured by Sysmex Corporation). When the particles were suspended, with respect to 100 parts by weight of a suspension liquid, 2 parts by weight of a surfactant (trade name: "Emulgen 120", manufactured by Kao Corporation) was added, and an ultrasonic wave treatment was performed for 1 minute, so that a state in which the suspension liquid was free from aggregation was formed. When the powder processability was low, since a treatment time necessary to obtain a predetermined particle diameter was increased, the resin was over-pulverized, and the amount of fine particles having a diameter of 5 µm or less was increased. Since the fine particles were separated as a waste powder in a classification step, the use efficiency of the raw resin material was decreased; hence, the evaluation result of "A" in which the generation of fine particles having a diameter of 5 µm or less was suppressed was judged that the processability was preferable.

### 5.6.5. Evaluation of Tensile Strength

A tensile test of the sheet obtained in each Example was performed in accordance with JIS P 8113. A sheet manufactured by the heat press method and a sheet manufactured by the heating roller method were both used. After the sheet was cut into a test piece (total length: 180 mm) and then set in a tensile tester ("AGS-X", manufactured by Shimadzu Corporation), the tensile test was performed at an elongation rate of 20 mm/min. From a maximum load until the test piece was fractured, a fracture stress (MPa) of the test piece was obtained as the tensile strength. In accordance with JIS P 8111, the tensile test was performed in an environment at a temperature of 23°C and a humidity of 50%. The evaluation was performed based on a tensile strength of 15 MPa. A tensile strength of 15 MPa or more was evaluated as "A", a tensile strength of less than 15 MPa was evaluated as "B", and the results are shown in Tables 3 and 4.

### 5.6.6. Evaluation of Rigidity of Sheet at High Temperature

As a sheet rigidity evaluation of the sheet at a high temperature, in the state schematically shown in FIG. 3A, a sheet passing test using the heating rollers HR was performed. To the sheet passing through between the heating rollers HR, the force Fa by which the sheet which is heated is advanced, the force Fb which winds the sheet around the upper heating roller HR, and the force Fc which winds the sheet around the lower heating roller HR are applied. In order to enable the sheet to pass through between the heating rollers HR, the force Fa by which the sheet thus heated is straightly advanced is required to satisfy Fa>Fb and Fa>Fc, and in the state described above, it can be judged that the rigidity at a high temperature is high. When the rigidity at a high temperature is low, Fb>Fa or Fc>Fa is satisfied, and the sheet cannot pass through between the heating rollers HR since winding around the upper or the lower roller HR.

A hollow core metal covered with a silicone rubber and a tetrafluoroethylene-perfluoroalkyl vinyl ether copolymer (PFA resin) in this order was used as the heating roller. The heating roller was heated by a halogen heater provided at a hollow portion of the heating roller so that the surface temperature thereof was set to 180°C. The sheets (sheet thickness: approximately 130 µm) manufactured by the heat press method and the heating roller method were each cut into a size of 150 mm×100 mm, and a sheet thus cut was then charged to the heating rollers so as to pass therethrough for a nip time of one second.

As the evaluation criteria of the rigidity of the sheet at a high temperature, when all 20 sheets passed through between the heating rollers, the rigidity thereof was evaluated as "A", and when at least one sheet could not pass through between the rollers since winding therearound, the rigidity thereof was evaluated as "B". The results thereof are shown in the column of rigidity in Tables 3 and 4.

### 5.6.7. Evaluation of Storage Stability

The sheet manufacturing binding materials of Examples and Comparative Examples were each filled in a propylene-made container. The container filled with the sheet manufacturing binding material was stored in an environment at 50°C for 7 days. When the fluidity of the powder was not changed from that at the initial stage, the powder was evaluated as "A", when the change in fluidity was observed by visual inspection, the powder was evaluated as "B", and the results thereof are shown in Tables 3 and 4.

### Table 3

**Table 3:**

| EVALUATION FORM | EVALUATION ITEM | EXAMPLE 1 | EXAMPLE 2 | EXAMPLE 3 | EXAMPLE 4 | EXAMPLE 5 | EXAMPLE 6 |
|---|---|---|---|---|---|---|---|
| SHEET BINDING MATERIAL | GLASS TRANSITION TEMPERATURE (°C) | 73.0 | 70.0 | 80.0 | 69.0 | 65.0 | 69.0 |
| | SOFTENING TEMPERATURE (°C) | 113.0 | 113.0 | 125.0 | 112.0 | 110.0 | 112.0 |
| | SOFTENING TEMPERATURE/GLASS TRANSITION TEMPERATURE | 1.55 | 1.61 | 1.56 | 1.62 | 1.69 | 1.62 |
| | PULVERIZATION INDEX | 0.77 | 0.74 | 0.61 | 0.62 | 0.79 | 0.62 |
| | POWDER PROCESSABILITY | A | A | A | A | A | A |
| SHEET BY HEAT PRESS | TENSILE STRENGTH | A | A | A | A | A | A |
| | HIGH-TEMPERATURE RIGIDITY | A | A | A | A | A | A |
| SHEET BY HEATING ROLLERS | TENSILE STRENGTH | A | A | A | A | A | A |
| | HIGH-TEMPERATURE RIGIDITY | A | A | A | A | A | A |
| RECEIVING CONTAINER | STORAGE STABILITY | A | A | A | A | A | A |

### Table 4

**Table 4:**

| EVALUATION FORM | EVALUATION ITEM | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 |
|---|---|---|---|---|---|---|
| SHEET BINDING MATERIAL | GLASS TRANSITION TEMPERATURE (°C) | 54.0 | 69.0 | 82.0 | 83.0 | 53.0 |
| | SOFTENING TEMPERATURE (°C) | 96.0 | 133.0 | 188.0 | 169.0 | 114.0 |
| | SOFTENING TEMPERATURE/GLASS TRANSITION TEMPERATURE | 1.78 | 1.93 | 2.29 | 2.04 | 2.15 |
| | PULVERIZATION INDEX | 0.80 | 0.71 | 0.23 | 0.33 | 0.96 |
| | POWDER PROCESSABILITY | A | A | B | A | A |
| SHEET BY HEAT PRESS | TENSILE STRENGTH | A | A | A | A | B |
| | HIGH-TEMPERATURE RIGIDITY | B | A | A | A | B |
| SHEET BY HEATING ROLLERS | TENSILE STRENGTH | A | B | B | B | B |
| | HIGH-TEMPERATURE RIGIDITY | B | B | B | B | B |
| RECEIVING CONTAINER | STORAGE STABILITY | B | A | A | A | B |

### 5.7. Evaluation Results

In each of Examples 1 to 6, a higher glass transition temperature could be obtained as compared to that of Comparative Example 1.

In addition, in Comparative Examples 2 to 5 in which the polyvalent alcohol had no secondary hydroxyl group, it was found that when the glass transition temperature was increased from 53°C of Comparative Example 5 to 82°C of Comparative Example 3, the softening temperature was increased from 114°C of Comparative Example 5 to 188°C of Comparative Example 3. Hence, the ratio of the softening temperature/glass transition temperature in Comparative Examples 2 to 5 was a value between 1.93 of Comparative Example 2 and 2.29 of Comparative Example 3.

On the other hand, in Examples 1 to 6, it was found that even when the glass transition temperature was increased from 65.0°C of Example 5 to 80.0°C of Example 3, the increase in softening temperature could be suppressed from 110.0°C of Example 5 to 125.0°C of Example 3. Hence, the ratio of the softening temperature/glass transition temperature of Examples 1 to 6 was a small value from 1.55 of Example 1 to 1.69 of Example 5 as compared to that of Comparative Examples 2 to 5.

The results described above indicate that since the rigidity of the polyester molecule is increased by using a carboxylic acid having an aromatic structure as the polybasic acid, a high glass transition temperature is obtained and, in addition, since a polyvalent alcohol having a secondary hydroxyl group is used, the degree of crystallinity between the polyester molecules is reduced by the steric hindrance, and as a result, a low softening temperature can be obtained. Hence, the results described above indicate that a high glass transition temperature and a low softening temperature can be simultaneously obtained.

In addition, in Comparative Examples 2 to 5, the range of the pulverization index was wide such as from 0.96 of Comparative Example 5 to 0.23 of Comparative Example 3. In particular, in Comparative Example 3 in which the pulverization index was low, the powder processability was low. On the other hand, in Examples 1 to 6, the range of the pulverization index was narrow, such as from 0.79 of Example 4 to 0.61 of Example 3, as compared to that of Comparative Examples 2 to 5, and the powder processability of each of Examples 1 to 6 was preferable.

It was found that the pulverization index correlated with the softening temperature, and that as the softening temperature was increased, the pulverization index tended to be decreased. It was found that in Example 2, since the increase in softening temperature was suppressed by a steric hindrance effect of the secondary hydroxyl group, the distribution of the pulverization index was narrow, and a preferable powder processability could be realized.

In addition, compared to Example 1 in which trimellitic anhydride was not contained as a tricarboxylic acid, in Example 2, the pulverization index was decreased, and in Example 4 in which a molar ratio of trimellitic anhydride was high, the pulverization index tended to be further decreased. The reason for this is believed as described below. Since a dicarboxylic acid and/or a tricarboxylic acid is used as the polybasic acid, the molecule thereof forms a branched structure, and molecular chains formed therefrom are complicatedly entangled with each other, so that the pulverization index is decreased, and a strength against an exterior mechanical force is increased.

The tensile strength of the sheet of each of Examples 1 to 6 was preferable regardless of the heating method for sheet manufacturing. On the other hand, in Comparative Example 5, a low tensile strength was only obtained from the sheets manufactured by the two heating methods. Since the pulverization index of Comparative Example 5 was high, and the polyester was fragile, even when the sheet was formed, the binding material which binds the fibers was fractured by an exterior force, and partially because of that, the tensile strength of the sheet was decreased in some cases.

Although the sheet manufactured by the heat press method of each of Comparative Examples 2 to 4 had a high tensile strength, the tensile strength of the sheet manufactured by the heating roller method was low. The reason for this is believed that since the softening temperature of the binding material of each of Comparative Examples 2 to 4 is high, heating by the heating roller method is insufficient, the binding material cannot sufficiently flow, the adhesion areas of the fibers are decreased, and as a result, the tensile strength of the sheet is decreased. Hence, it was found that the softening temperature of the binding material was preferably lower than 133.0°C and more preferably 130.0°C or less.

As for the rigidity of the sheet at a high temperature, in Examples 1 to 6, the sheet manufactured by the heat press method and the sheet manufactured by the heating roller method each had a high high-temperature rigidity at a temperature of 180°C. In Comparative Examples 2 to 4, the sheet manufactured by the heat press method also had a high high-temperature rigidity. However, in Comparative Examples 2 to 4, the high-temperature rigidity of the sheet manufactured by the heating roller method was decreased. The reasons for this are believed that in the sheet of each of Comparative Examples 2 to 4 manufactured by the heating roller method, since the softening of the binding material is not sufficient due to insufficient heating, and the adhesion areas of the fibers are decreased, the tensile strength is low and, in addition, since the inherent rigidity is low, the high-temperature rigidity is also low. On the other hand, in Comparative Examples 1 and 5, in the sheet manufactured by the heat press method and the sheet manufactured by the heating roller method, the high-temperature rigidity was decreased. The difference in high-temperature rigidity is believed due to the difference in the glass transition temperature of the binding material. When the glass transition temperature is high as in the case of Examples 1 to 6 and Comparative Examples 2 to 4, since the solid state of the binding material at a high temperature is likely to be maintained, the high-temperature rigidity of the sheet can be increased. It was found that in order to secure the high-temperature rigidity of the sheet, the glass transition temperature of the sheet manufacturing binding material was preferably 65.0 or more.

In the sheet manufacturing binding material of each of Examples 1 to 6 and Comparative Examples 2 to 4 which was filled in the container and was stored in an environment at 50°C, the fluidity of the powder was not significantly changed. On the other hand, in Comparative Examples 1 and 5, a phenomenon in which the binding material was formed into lumps was observed. It is believed that in Examples 1 to 6 and Comparative Examples 2 to 4, since the glass transition temperature is high, the storage stability in a high-temperature environment is high. Accordingly, the generation of defects in a high-temperature environment, such as shipping transportation, can be suppressed. It was found that in order to improve the storage stability of the sheet manufacturing binding material filled in the receiving container, the glass transition temperature of the binding material was preferably 65°C or more.

In Example 6 in which the sheet manufacturing binding material integrated with the blue pigment was used, a sheet colored in blue was obtained. The withdrawal of the blue pigment from this sheet was not observed. The reason for this is that most of the pigment is adhered to the cellulose with the polyester interposed therebetween. In addition, the glass transition temperature, the softening temperature, and the processability of the sheet manufacturing binding material integrated with the blue pigment, and the heating process compatibility and the tensile strength of the sheet formed using this sheet manufacturing binding material had the values equivalent to those of Example 4 in which no blue pigment was contained. The reason for this is believed that since the ratio of the polyester functioning as the sheet manufacturing binding material is dominant as compared to that of the pigment and/or the antistatic agent, the characteristics of the polyester become dominant.

The present disclosure is not limited to the embodiments described above and may be variously changed. For example, the present disclosure includes substantially the same structure (for example, the structure in which the function, the method, and the result are the same as those described above, or the structure in which the object and the effect are the same as those described above) as the structure described in the embodiment. In addition, the present disclosure includes the structure in which a nonessential portion of the structure described in the embodiment is replaced with something else. In addition, the present disclosure includes the structure which performs the same operational effect as that of the structure described in the embodiment or the structure which is able to achieve the same object as that of the structure described in the embodiment. In addition, the present disclosure includes the structure in which a known technique is added to the structure described in the embodiment.

## Claims

1. A sheet manufacturing binding material comprising:
a polyester obtained by a reaction between a polyvalent alcohol having a secondary hydroxyl group and a polybasic acid.

2. The sheet manufacturing binding material according to claim 1, wherein
the polyester has a pulverization index of 0.30 to 0.80.

3. The sheet manufacturing binding material according to claim 1, wherein
the polybasic acid is a polyvalent carboxylic acid having an aromatic structure.

4. The sheet manufacturing binding material according to claim 1, wherein
the polybasic acid is selected from a dicarboxylic acid having an aromatic structure and a tricarboxylic acid having an aromatic structure.

5. The sheet manufacturing binding material according to claim 1, wherein
the polyester has a glass transition temperature of 65.0°C or more.

6. The sheet manufacturing binding material according to claim 1, wherein
the polyester has a softening temperature of 130.0°C or less.

7. The sheet manufacturing binding material according to claim 1, wherein
the polyester forms composite particles integrally with an aggregation suppressor.

8. The sheet manufacturing binding material according to claim 7, wherein
the polyester and the aggregation suppressor form composite particles integrally with a coloring material.

9. The sheet manufacturing binding material according to claim 1, wherein
the sheet manufacturing binding material has a volume basis average particle diameter of 20.0 µm or less.

10. A method for manufacturing the sheet manufacturing binding material according to claim 1.

11. A receiving container receiving the sheet manufacturing binding material according to claim 1.

12. A sheet comprising: fibers; and the sheet manufacturing binding material according to claim 1, wherein
the fibers are bound to each other by the sheet manufacturing binding material.

13. A sheet manufacturing apparatus comprising:
a mixing portion mixing fibers and the sheet manufacturing binding material according to claim 1;
a deposition portion depositing a mixture mixed in the mixing portion; and
a sheet forming portion forming a sheet by heating a deposit deposited in the deposition portion.
